# FASCICULE DE BREVET EUROPEEN

(11) **EP 2 625 093 B1**
(45) Date de publication et mention de la délivrance du brevet: **05.08.2015**
(21) Numéro de dépôt: 11771214.1
(22) Date de dépôt: 04.10.2011
(51) Int. Cl.: B63B 27/24, F16L 37/36, F16L 37/367

(54) **DISPOSITIF DE MANOEUVRE DES ROBINETS D'UN CONNECTEUR-DECONNECTEUR**
VORRICHTUNG ZUR STEUERUNG DER VENTILE EINES STECKERS/TRENNERS
DEVICE FOR CONTROLLING THE VALVES OF A CONNECTOR/DISCONNECTOR

(30) Priorité: 05.10.2010 FR 1003934
(43) Date de publication de la demande: 14.08.2013
(73) Titulaire: KSB S.A.S, 92635 Gennevilliers (FR)
(72) Inventeur: EYQUEM, Sébastien, F-33000 Bordeaux (FR)
(74) Mandataire: Eidelsberg, Victor Albert
(86) Numéro de dépôt international: PCT/FR2011/000539
(87) Numéro de publication internationale: WO 2012/045925

(56) Documents cités:
- WO-A1-89/03002
- WO-A1-03/004925
- WO-A2-2009/071591

## Description

La présente invention se rapporte aux installations de transfert de fluide, notamment, mais non exclusivement, au transport du gaz naturel liquéfié (GNL) en off-shore (mer ouverte) entre un bâtiment, tel qu'un terminal flottant, et un bâtiment de navigation, tel qu'un méthanier.

Un des systèmes de transfert de fluide adapté est constitué d'un flexible cryogénique, porté par le terminal flottant, au bout duquel un connecteur-déconnecteur GNL permet de relier ce dernier au méthanier.

D'une manière générale, un connecteur-déconnecteur GNL (ou coupleur/découpleur GNL) est un dispositif destiné à assurer une liaison rapidement déconnectable entre deux tronçons de canalisation.

Un connecteur-déconnecteur GNL est composé notamment d'un dispositif de connexion-déconnexion de service (appelé communément QC/DC) permettant d'assurer la liaison entre les deux bâtiments, mais également d'un dispositif de déconnexion d'urgence (appelé communément ERS), permettant de séparer la canalisation en deux tronçons obturés, composé de deux robinets d'isolement entre lesquels la canalisation peut ainsi être séparée sans perte de fluide.

Cette fonction ERS, telle que préalablement conçue par les sociétés KSB et Eurodim (brevet EP 1405003), est notamment constituée de deux robinets de type papillon pourvus chacun d'un disque monté pivotant à l'intérieur de l'embout autour d'un arbre de manoeuvre entre une position d'ouverture de la section transversale d'écoulement de fluide et une position de fermeture de cette dernière, et des dispositifs extérieurs de commande du pivotement s'étendant perpendiculairement à l'axe de la canalisation et étant parallèles l'un à l'autre. Un premier robinet à papillon est monté à une première extrémité du premier embout et un deuxième robinet à papillon est monté à l'extrémité du deuxième embout, les faces des deux papillons étant tournées l'une vers l'autre. Ce dispositif, qui présente l'avantage d'être très compact et relativement léger, permet aussi d'avoir une très faible perte de fluide lors d'une déconnexion d'urgence du fait du très faible volume inscrit entre les deux papillons en position fermée. Il se caractérise notamment par le chevauchement des papillons lors de leur manoeuvre et donc par le faible écartement entre les deux arbres de manoeuvre.

Ce type de connecteur-déconnecteur peut notamment être employé de manière avantageuse dans le cadre d'un transfert par flexible flottant ou semi-flottant, de par sa masse et son encombrement réduits. Cependant, un transfert par flexible flottant, contrairement à un transfert par flexible aérien, impose de réaliser l'alimentation hydraulique des dispositifs du connecteur-déconnecteur uniquement depuis le méthanier, et non pas par l'intermédiaire du flexible depuis le terminal flottant, à cause des pertes de charge importantes dues à la longueur du flexible flottant et des risques de chocs au cours des différentes opérations de manoeuvre qui pourraient remettre en cause l'efficacité des systèmes de sécurité. Il est de plus préférable de limiter les équipements en extrémité de flexible, pour limiter d'autant la masse et l'encombrement afin de faciliter sa manutention, mais aussi pour limiter les risques de chocs contre la coque du méthanier lors d'une déconnexion.

Un système d'approche et de guidage des deux embouts permet notamment, lors de la fin d'une manoeuvre de connexion et du début d'une manoeuvre de déconnexion de service, d'assurer une coaxialité et une orientation angulaire entre les deux embouts permettant le parfait positionnement de l'un par rapport à l'autre.

L'invention vise une installation de transfert de fluide, dans laquelle le dispositif d'actionnement des robinets du connecteur-déconnecteur est actionné par un même vérin hydraulique alimenté par une centrale hydraulique embarquée sur le bâtiment de navigation sans pour autant que l'embout se trouvant du côté de l'autre bâtiment soit rendu trop lourd et trop encombrant par un ressort de rappel de grande dimension ou par une source de fluide sous pression nécessaire à l'actionnement.

Le WO 2009/071591 décrit une installation suivant le préambule de la revendication 1.

L'invention a donc principalement (mais non exclusivement) pour objet une installation de transfert de fluide, comprenant une canalisation flottante, l'adjectif flottant englobant aussi le cas où la canalisation est semi-flottante, flexible mettant un bâtiment de navigation en communication avec un autre bâtiment et ayant un premier embout, du côté du bâtiment de navigation, et un second embout, du côté de l'autre bâtiment, à l'extrémité du flexible cryogénique, d'un vertical de la canalisation en ayant le premier embout au-dessus du second embout.

Ce connecteur-déconnecteur peut être de type "classique", où les dispositifs de connexion-déconnexion de service (communément appelés QC/DC) et de déconnexion d'urgence (communément appelés ERS) sont clairement différenciés, comme il peut regrouper en une seule interface ces dispositifs, actionnés par des vérins hydrauliques alimentés par une seule centrale hydraulique embarquée sur le bâtiment de navigation, un seul vérin hydraulique permettant d'actionner les robinets, un premier robinet à arbre de manoeuvre, de préférence de type papillon, étant monté à l'extrémité du premier embout tournée vers le second embout et un deuxième robinet à arbre de manoeuvre, de préférence de type papillon, étant monté à l'extrémité du second embout tournée vers le premier robinet. L'installation est caractérisée en ce que les robinets sont actionnés par un seul vérin qui leur est commun et il est prévu un mécanisme de transformation du déplacement en translation du vérin en un pivotement conjoint des arbres de manoeuvre des robinets, le mécanisme de transformation étant composé de deux parties, la première solidaire du premier embout, la seconde du second embout, qui sont agencées de manière à pouvoir se coupler ou se désaccoupler respectivement lorsque le connecteur-déconnecteur se connecte ou se déconnecte.

D'une manière très préférée, dans le cadre d'un connecteur-déconnecteur GNL regroupant en une seule interface les dispositifs QC/DC et ERS, un troisième robinet actionné par le vérin commun et à arbre de manoeuvre, de préférence de type papillon, est monté à l'autre extrémité du second embout en ayant son arbre de manoeuvre parallèle à ceux des autres robinets. On assure ainsi la double barrière d'étanchéité du côté de l'autre bâtiment, non seulement en déconnexion de service, qui est exigée par mesure de sécurité, mais également en déconnexion d'urgence.

De préférence, il est prévu une pièce de manoeuvre, qui est montée sur le premier embout, seulement mobile en translation, qui est associée en commun aux robinets et à laquelle le vérin applique une force de déplacement.

Deux ou, de préférence, trois robinets à papillon, dans le cadre d'un connecteur-déconnecteur GNL en une seule interface, sont ainsi actionnés par une même pièce de manoeuvre située sur l'embout côté méthanier ayant uniquement un mouvement de translation produit par un vérin hydraulique alimenté directement par une centrale hydraulique sur le méthanier. La synchronisation de fermeture et d'ouverture des robinets est ainsi bien assurée par cette pièce de manoeuvre.

On a choisi dans ce qui suit de présenter uniquement l'actionnement du robinet du connecteur à une seule interface, qui est le cas le plus complexe avec la commande de trois robinets, mais l'invention s'applique d'une manière générale aux autres cas.

De préférence, la pièce de manoeuvre peut se déplacer parallèlement à l'axe de la veine fluide ou perpendiculairement.

Dans les deux cas, les première et seconde parties ne sont, de préférence, en contact qu'en un ou deux points, ce qui permet de bien assurer leur réunion et leur dissociation. La pièce de manoeuvre définit un premier évidement fermé et, débouchant à l'extérieur, suivant l'axe de la veine fluide en direction de l'embout côté flexible, un second évidement. Le mécanisme de transformation du déplacement de la pièce de manoeuvre comprend un premier galet monté roulant dans le premier évidement autour d'un axe de pivotement situé à l'une des extrémités d'une première bielle solidaire en rotation de l'arbre de manoeuvre du premier robinet, un deuxième galet monté roulant dans le second évidement autour d'un axe de pivotement situé à l'une des extrémités d'une deuxième bielle solidaire en rotation de l'arbre de manoeuvre du deuxième robinet, deux bielles d'entraînement, en un parallélogramme articulé, de la deuxième bielle à une troisième bielle et qui est solidaire en rotation de l'arbre de manoeuvre du troisième robinet.

Les segments de droite entre l'arbre de manoeuvre du premier robinet et l'axe de pivotement du galet implanté sur la bielle solidaire du premier robinet, d'une part, et l'arbre de manoeuvre du deuxième robinet, et l'axe de pivotement du galet implanté sur la bielle solidaire du deuxième robinet, d'autre part, sont parallèles, de même longueur et, de préférence, inclinés dans le sens horaire par rapport à l'axe de la canalisation, lorsque les deux robinets sont en position fermée, et deux bielles de liaison, en un parallélogramme articulé, de la deuxième bielle à une troisième bielle, qui est solidaire en rotation de l'arbre de manoeuvre du troisième robinet.

De préférence, dans ce cas, la direction de roulement des galets dans les évidements est perpendiculaire à la direction de déplacement de la pièce de manoeuvre.

Il est prévu, de préférence, un moyen mécanique maintenant les trois robinets en position ouverte pendant le transfert, ce moyen étant notamment réalisé par un blocage des galets permis par le fait que la pièce de manoeuvre définit, dans chaque évidement, une cavité s'étendant, au niveau de la position du galet, du côté opposé à l'arbre de manoeuvre correspondant, lorsque les robinets sont ouverts.

Dans une première solution, la pièce de manoeuvre est mobile en translation le long du premier embout parallèlement à l'axe de la veine fluide. Les première, deuxième et troisième bielles sont parallèles et de la même longueur, et une biellette complémentaire, articulée par l'une de ses extrémités à l'extrémité de la première bielle autre que celle ayant le premier galet et comportant à son autre extrémité un évidement d'articulation amovible de la biellette complémentaire à l'extrémité de la deuxième bielle autre que celle ayant le second galet, la longueur de la biellette complémentaire, décomptée entre ses axes d'articulation, étant égale à l'entraxe des deux galets, cette biellette complémentaire permettant la transmission du mouvement d'ouverture de la première à la deuxième bielle, lorsque le galet de cette dernière se situe au niveau de l'évidement débouchant de la pièce de manoeuvre.

Une butée, fixée sur la première bielle entre le point où la première bielle est rendue solidaire de l'arbre de manoeuvre du premier robinet et celui où est articulée la biellette complémentaire, permet, grâce à un ressort de torsion, positionné sur l'axe de rotation de la biellette complémentaire par rapport à la première bielle, le maintien de la biellette complémentaire dans une position fixe, lorsque les embouts sont séparés l'un de l'autre, de manière à permettre une reconnexion de la cinématique d'actionnement lors de la prochaine connexion du connecteur-déconnecteur GNL.

L'évidement de la pièce de manoeuvre et l'évidement de la biellette complémentaire sont disposés de manière à permettre le couplage ou le découplage du mécanisme respectivement lors d'une connexion ou d'une déconnexion du connecteur-déconnecteur.

Pour permettre la refermeture des robinets lorsqu'ils sont ouverts, les première, deuxième et troisième bielles sont inclinées par rapport à l'axe du premier embout, lorsque les robinets sont ouverts.

Dans une deuxième solution, la pièce de manoeuvre est mobile en translation perpendiculairement à l'axe de la veine fluide, et l'évidement débouchant de la pièce de manoeuvre ne correspondant pas à une surface fonctionnelle pour manoeuvrer le galet, une biellette complémentaire avec sa butée et son ressort de torsion n'est pas nécessaire.

La deuxième bielle est ainsi modifiée par rapport à la première solution, dans le sens où le positionnement des bielles permettant de transmettre le mouvement au troisième robinet est différent.

Dans les deux solutions présentées, il est également possible d'inverser le positionnement des galets et des évidements pour réaliser le même mouvement. Ainsi, la première bielle, solidaire en rotation de l'arbre de manoeuvre du premier robinet, définit un premier évidement et la deuxième bielle, solidaire en rotation de l'arbre de manoeuvre du deuxième robinet, définit un deuxième évidement. En appliquant, par exemple, cette modification à la deuxième solution proposée, les deux galets, qui coopèrent avec ces évidements, sont montés pivotant sur la pièce de manoeuvre qui garde son mouvement perpendiculaire à l'axe de la veine fluide. La deuxième bielle, solidaire de l'arbre de manoeuvre du deuxième robinet, a donc un évidement qui permet la connexion et la déconnexion du galet avec lequel elle coopère, lorsque les robinets sont en position fermée. De préférence, ce deuxième galet est libéré de l'évidement grâce à un déplacement supplémentaire de la pièce de manoeuvre n'agissant pas sur la position fermée des robinets, par le fait que les évidements formés par les surfaces de contact sont parallèles à l'axe de déplacement de la pièce de manoeuvre.

Quelle que soit la solution d'actionnement, il est prévu un système mécanique de maintien en fermeture des trois robinets lorsque les deux embouts sont séparés et, notamment, des deux robinets au niveau du deuxième embout, puisque séparés de la pièce de manoeuvre solidaire du premier embout. Ce système mécanique de maintien en fermeture des deux robinets du deuxième embout comprend, de préférence, un arbre, positionné en liaison pivot en une extrémité par rapport à la deuxième bielle, qui coulisse en son autre extrémité dans la rainure d'un alésage en pivot autour d'un axe fixe parallèle aux autres axes, et positionné de manière à ce que les axes soient alignés dans cet ordre, seulement quelques degrés (environ 2 à 10) de rotation avant la position fermée des robinets, un ressort, positionné sur l'arbre entre l'épaulement de l'arbre et l'alésage, permettant de reprendre les variations de distance entre les axes au cours de la rotation de la deuxième bielle, et de réaliser la fonction d'arc-boutement.

Les caractéristiques et avantages de la présente invention sont présentés en regard des figures annexées et données à titre d'exemples non limitatifs.

L'invention peut ainsi être intégrée dans une installation de transfert de gaz naturel liquéfié (GNL), entre un méthanier 1 et un terminal flottant 2 qui peut être de chargement ou de déchargement lui-même relié au réseau gaz par des tuyauteries situées sous la mer, cette installation comprenant notamment une canalisation 3 flexible cryogénique de type flottante ou semi-flottante, portée par le terminal flottant 2, ainsi qu'un connecteur-déconnecteur 4, permettant d'assurer la liaison entre le méthanier 1 et le flexible cryogénique flottant 3, qui regroupe en une unique interface les dispositifs QC/DC et ERS.

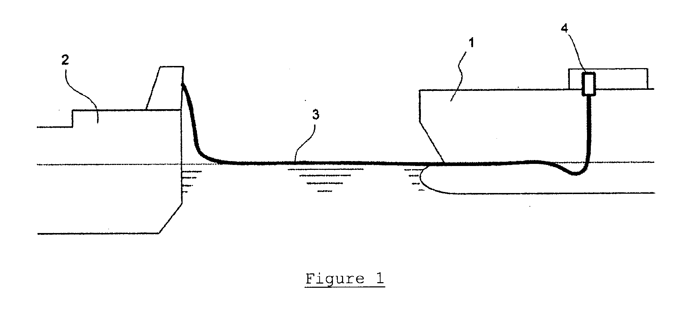

La Figure 1 représente schématiquement une installation de type "Floating" où le flexible cryogénique flottant 3 transférant le GNL est disposé de manière flottante à la surface de l'eau entre les deux bâtiments 1 et 2.

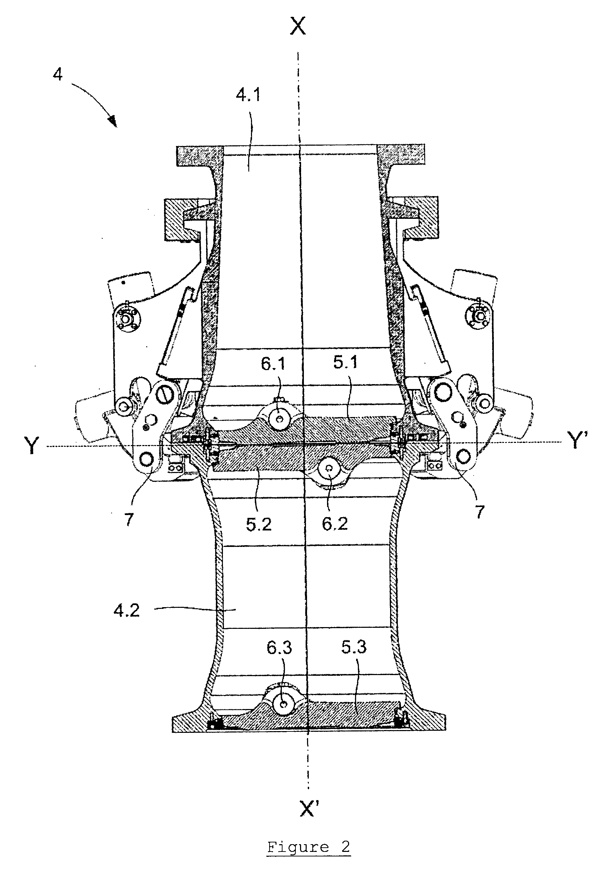

La Figure 2 est une vue en coupe du connecteur-déconnecteur 4. Il est composé de deux embouts 4.1 et 4.2, l'embout 4.1 est positionné sur le méthanier 1 en liaison avec le manifold alors que l'embout 4.2 est fixé à l'extrémité du flexible cryogénique flottant 3. Des modules de serrage 7 positionnés sur l'embout 4.1 permettent d'accoupler ou désaccoupler les deux embouts 4.1 et 4.2 au niveau de leur interface située dans le plan radial à l'axe de la canalisation passant par (YY'), de manière à relier les canalisations du méthanier 1 avec celles du terminal flottant 2. A l'extrémité de chaque embout 4.1 et 4.2 au niveau de leur interface est positionné un robinet à papillon, représenté fermé, respectivement 5.1, 5.2, pourvu chacun d'un disque ou papillon monté pivotant à l'intérieur de l'embout autour d'un arbre de manoeuvre respectivement 6.1 et 6.2, entre une position d'ouverture de la section transversale d'écoulement de fluide et une position de fermeture de cette dernière, et un dispositif extérieur de commande du pivotement, les arbres de manoeuvre s'étendant perpendiculairement à l'axe (XX') de la canalisation et étant parallèles l'un à l'autre. Les faces des deux papillons 5.1 et 5.2 sont tournées l'une vers l'autre. Un troisième robinet à papillon 5.3, positionné à l'autre extrémité de l'embout 4.2 pivotant lui aussi autour de son arbre de manoeuvre 6.3, parallèle aux arbres de manoeuvre 6.1 et 6.2, également représenté fermé, permet d'assurer une double barrière d'étanchéité à l'extrémité du flexible cryogénique flottant 3 à la suite d'une déconnexion entre les deux embouts 4.1 et 4.2 du connecteur-déconnecteur 4. Un système d'approche et de guidage (non représenté) des deux embouts 4.1 et 4.2 permet notamment, lors de la fin d'une manoeuvre de connexion et du début d'une manoeuvre de déconnexion, d'assurer une coaxialité et une orientation angulaire entre les deux embouts 4.1 et 4,2 permettant le parfait positionnement de l'un par rapport à l'autre.

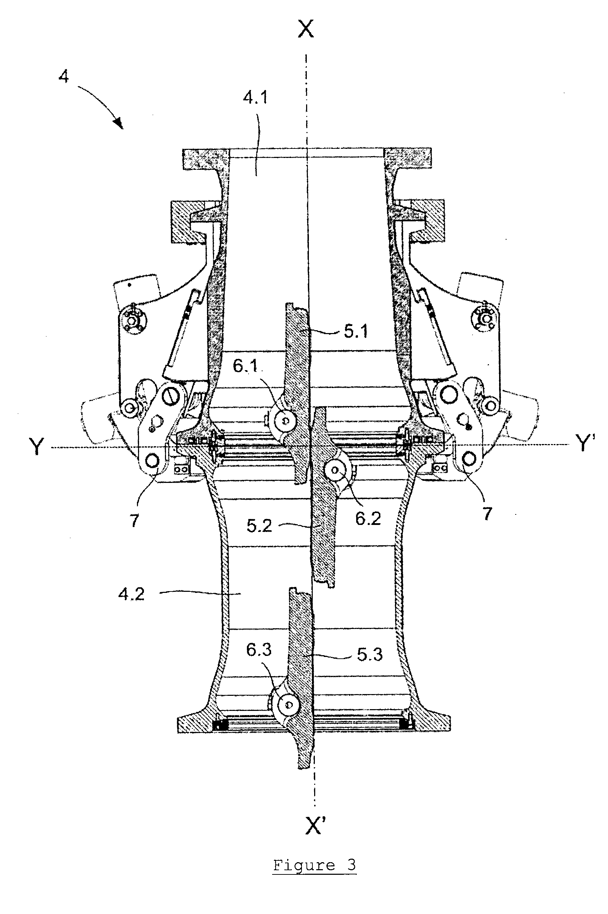

La Figure 3 est une vue en coupe du même connecteur-déconnecteur 4, mais représenté avec les robinets à papillon 5.1, 5.2 et 5.3 ouverts, après une rotation dans le sens anti-horaire par rapport à la Figure 2.

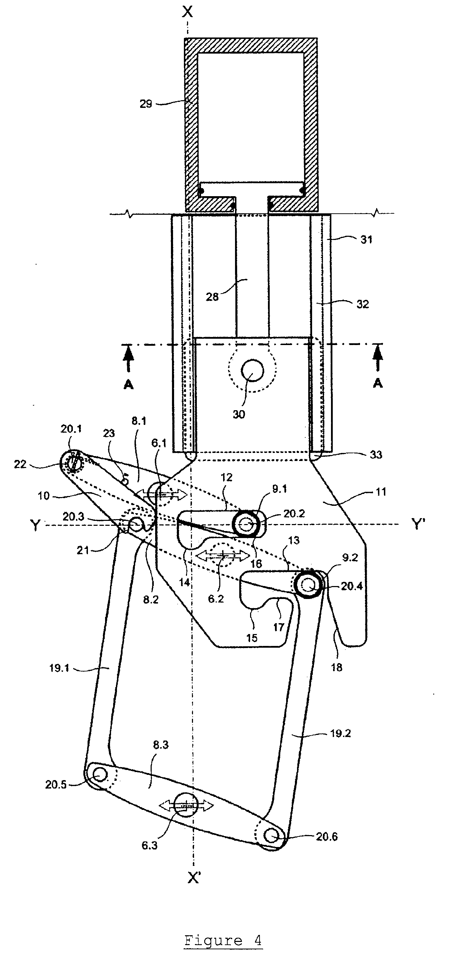

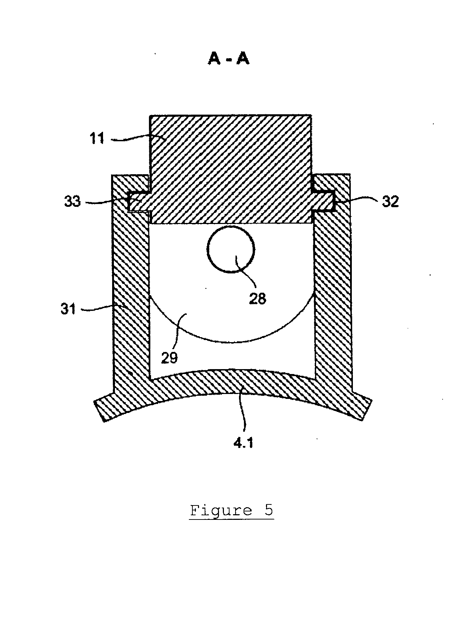

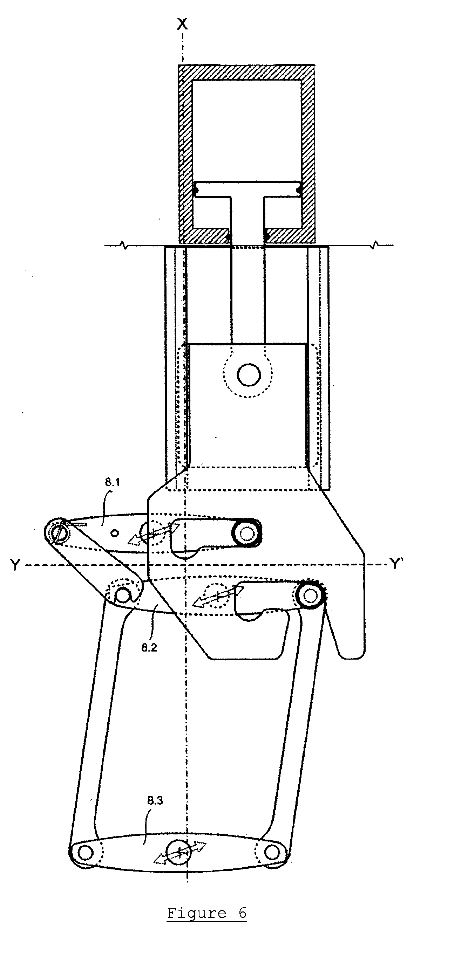

Les Figures 4 à 9 représentent schématiquement une première solution du dispositif d'actionnement des robinets à papillon, mécanisme de transformation du déplacement du vérin de manoeuvre, parallèlement à l'axe de la veine fluide, en un pivotement conjoint des papillons des trois robinets, avec la possibilité de couplage et découplage de ce mécanisme respectivement lors d'une connexion ou déconnexion du système de transfert.

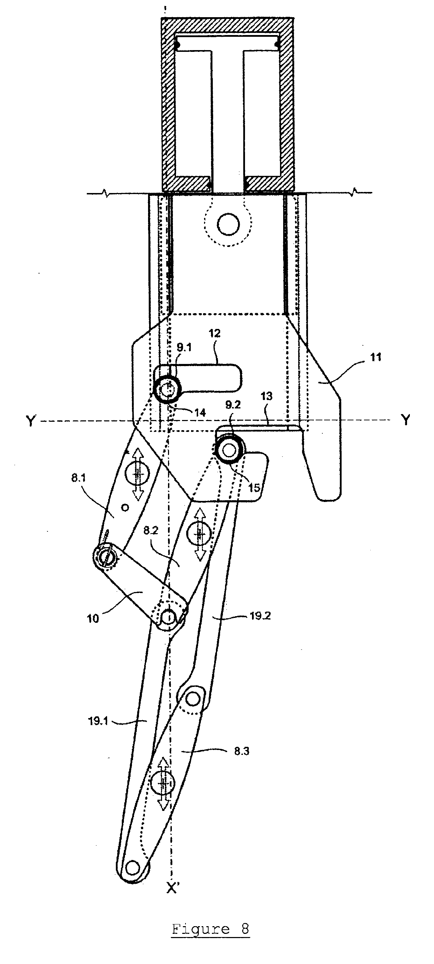

A l'extérieur de la canalisation, des bielles 8.1, 8.2 et 8.3 sont fixées respectivement à l'extrémité des arbres de manoeuvre 6.1, 6.2 et 6.3 des robinets à papillon, de telle manière qu'elles soient parallèles les unes par rapport aux autres et légèrement inclinées dans le sens horaire par rapport à l'axe (XX') de la canalisation lorsque les robinets à papillon sont en position ouverts (voir Figure 8). A l'extrémité droite des bielles 8.1 et 8.2 sont positionnés respectivement des galets 9.1 et 9.2 en liaison pivot respectivement autour des axes 20.2 et 20.4, de manière à ce que la distance entre les axes 6.1 et 20.2 et entre les axes 6.2 et 20.4 soit identique. A l'autre extrémité de la bielle 8.1 est positionnée en liaison pivot autour de l'axe 20.1 une biellette 10 complémentaire, dont l'autre extrémité est pourvue d'un évidement en "U" 21 de manière à coopérer avec l'axe 20.3 solidaire de la bielle 8.2, de manière à ce que la distance entre les axes 6.1 et 20.1 et entre les axes 6.2 et 20.3 soit identique. Les bielles 8.1 et 8.2 étant parallèles, les quadrilatères formés par les axes 6.1, 6.2, 20.3 et 20.1 d'une part, et par les axes 6.1, 6.2, 20.4 et 20.2 d'autre part représentent des parallélogrammes déformables.

Une bielle 19.2 est montée en liaison pivot en une extrémité avec la bielle 8.2 par exemple autour de l'axe 20.4, et également en liaison pivot en son autre extrémité avec la bielle 8.3 autour de l'axe 20.6, de manière à ce que la distance entre les axes 6.2 et 20.4 d'une part et entre les axes 6.3 et 20.6 d'autre part soit identique. Une bielle 19.1 est montée en liaison pivot en une extrémité avec la bielle 8.2 par exemple autour de l'axe 20.3, et également en liaison pivot en son autre extrémité avec la bielle 8.3 autour de l'axe 20.5, de manière à ce que la distance entre les axes 6.2 et 20.3 d'une part et entre les axes 6.3 et 20.5 d'autre part soit identique. Les bielles 8.2 et 8.3 étant parallèles, les quadrilatères formés par les axes 6.2, 6.3, 20.6 et 20.4 d'une part, et par les axes 6.2, 6.3, 20.5 et 20.3 d'autre part représentent des parallélogrammes déformables. De préférence, les axes 20.5 et 20.6 sont à égale distance de l'axe 6.3, par conséquent les axes 20.3 et 20.4 sont de préférence à égale distance de l'axe 6.2.

Un vérin 29 (représenté en coupe) permet le déplacement d'une pièce de manoeuvre 11 par l'intermédiaire de son piston 28 relié à celle-ci par l'axe 30. La coopération entre les languettes 33 de la pièce de manoeuvre 11 et les rainures 32 du guide 31 solidaire de l'embout 4.1, confère à cette pièce de manoeuvre 11 un unique degré de liberté qui est un mouvement de translation parallèle à l'axe (XX') de la canalisation.

Cette pièce de manoeuvre 11 est dans le même plan que les galets 9.1 et 9.2, par exemple, dans un plan supérieur aux bielles 8.1 et 8.2.

Le galet 9.1 est initialement positionné dans l'évidement de la pièce de manoeuvre 11 situé entre les surfaces de contact 12 et 16.

Lorsque les embouts 4.1 et 4.2 ne sont pas en contact (avant une connexion de service ou à la suite d'une déconnexion du système de transfert), l'axe 20.3, solidaire de l'embout 4.2, n'étant donc pas en contact avec la biellette 10 complémentaire, un ressort de torsion 22 positionné sur l'axe 20.1 exerce un effort de rotation sur la biellette 10 complémentaire dans le sens anti-horaire autour de l'axe 20.1 de manière à la maintenir en position contre la butée 23 fixée sur la bielle 8.1.

Les flèches représentées au niveau des arbres de manoeuvre 6.1, 6.2 et 6.3 symbolisent la position des robinets à papillon correspondants par rapport à l'axe (XX') de la canalisation. Le plan radial à l'axe de la canalisation passant par l'axe (YY') correspond à l'interface entre les embouts 4.1 et 4.2.

Le vérin 28, 29 peut également être positionné à l'envers, de manière à ce que sa grande section travaille en ouverture des robinets.

La Figure 4 représente le dispositif lorsque les embouts 4.1 et 4.2 sont connectés et les robinets à papillon 5.1, 5.2 et 5.3 fermés. La manoeuvre d'ouverture des robinets à papillon est provoquée par la translation vers le haut de la pièce de manoeuvre 11. La surface de contact 16 de la pièce de manoeuvre 11 entraîne le galet 9.1, ce qui provoque la rotation dans le sens anti-horaire de la bielle 8.1 avec l'arbre de manoeuvre 6.1, qui elle-même entraîne par l'intermédiaire de la biellette 10 complémentaire la rotation identique de la bielle 8.2 avec l'arbre de manoeuvre 6.2, qui elle-même entraîne par l'intermédiaire des bielles 19.1 et 19.2 la rotation identique de la bielle 8.3 avec l'arbre de manoeuvre 6.3.

La Figure 5 est une vue en coupe de la Figure 4 qui présente les pièces d'un principe de guidage et d'actionnement de la pièce de manoeuvre 11, solidaire de l'embout 4.1.

La Figure 6 représente le mécanisme dans un degré de rotation intermédiaire lorsque les bielles 8.1, 8.2 et 8.3 sont perpendiculaires à l'axe (XX') de la canalisation.

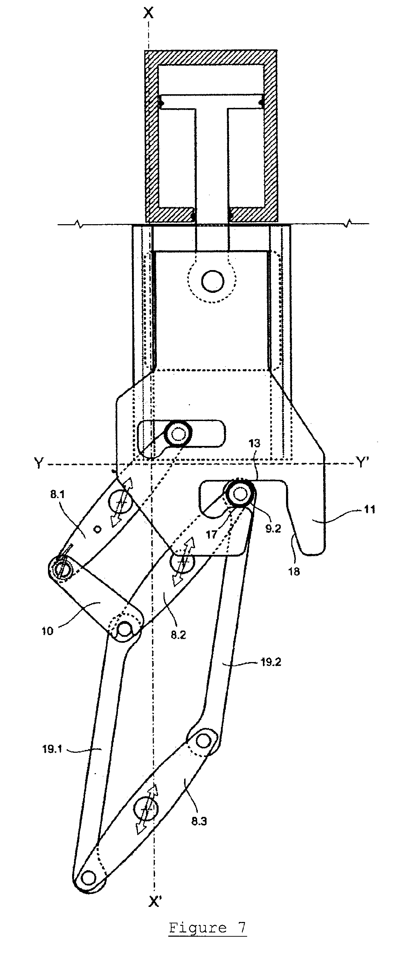

L'évidement 18 permet l'accouplement, lors d'une connexion de service, du mécanisme de transformation par le fait que le galet 9.2 entre en contact avec la surface de contact 13 de la pièce de manoeuvre 11, et au contraire la libération, lors d'une opération de déconnexion. La biellette 10 complémentaire permet ainsi la transmission du mouvement d'ouverture des robinets à papillons à la bielle 8.2, puis 8.3 grâce aux bielles 19.1 et 19.2, jusqu'à ce que le galet 9.2 arrive au niveau de la surface de contact 17 de la pièce de manoeuvre 11, celle-ci entraînant donc directement les bielles 8.1 et 8.2 en rotation, cet état de la cinématique étant représenté par la Figure 7.

La Figure 8 représente le mécanisme en la position correspondant à la position ouverte des robinets à papillon, après la translation maximale vers le haut de la pièce de manoeuvre 11. Dans cette position, des évidements en "U" 14 et 15 sur les surfaces de contact de la pièce de manoeuvre 11, permettent d'améliorer le maintien en position des galets 9.1 et 9.2 en position en annulant les jeux fonctionnels entre galets et évidements. Par conséquent, les robinets à papillon 5.1, 5.2 et 5.3 restent parfaitement ouverts lors du transfert de fluide, empêchant toute oscillation induite par l'écoulement du fluide ou par leur propre poids.

Les robinets à papillon 5.1, 5.2 et 5.3 ainsi en position ouverts, une manoeuvre de fermeture des robinets est provoquée par le mouvement inverse, c'est-à-dire la translation vers le bas de la pièce de manoeuvre 11, dont la surface de contact 12 provoque la rotation dans le sens horaire de la bielle 8.1 par l'intermédiaire du galet 9.1, et dont la surface de contact 13 provoque la rotation identique de la bielle 8.2 par l'intermédiaire du galet 9.2, grâce à la légère inclinaison initiale des bielles 8.1 et 8.2 par rapport à l'axe (XX'). Ainsi, dans le cas d'une manoeuvre de fermeture, la biellette 10 complémentaire n'a pas de fonction mécanique. Comme en ouverture, ce mouvement entraîne la rotation identique de la bielle 8.3 par l'intermédiaire des bielles 19.1 et 19.2.

Un unique mouvement de translation de la pièce de manoeuvre 11 entraîne donc la rotation simultanée des trois robinets à papillon 5.1, 5.2 et 5.3 en ouverture comme en fermeture respectivement par l'intermédiaire des arbres de manoeuvre 6.1, 6.2 et 6.3.

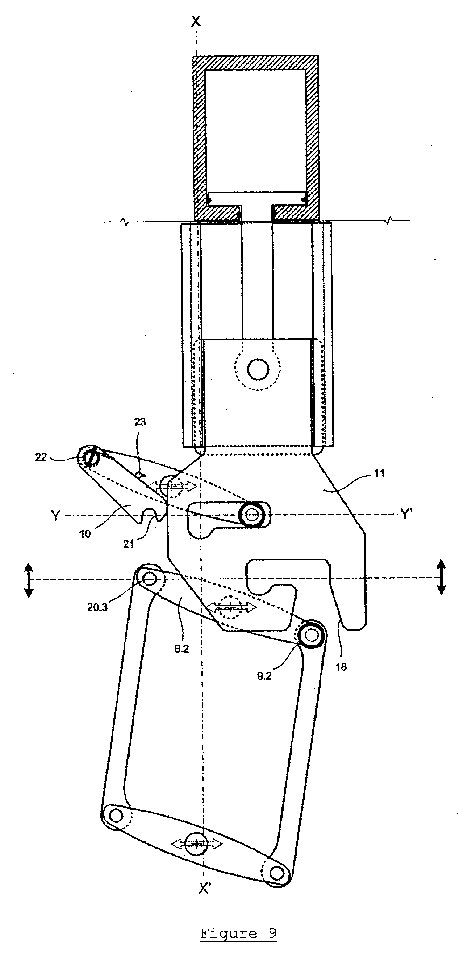

La Figure 9 représente le mécanisme lorsque les embouts 4.1 et 4.2 sont en fin d'approche en phase de connexion ou en début de manoeuvre de déconnexion du système de transfert, les robinets à papillon 5.1, 5.2 et 5.3 étant bien entendu fermés dès lors que les embouts 4.1 et 4.2 ne sont pas connectés. La cinématique du dispositif est donc positionnée comme en Figure 4. L'évidement 18 de la pièce de manoeuvre 11 permet ainsi l'arrivée ou le départ du galet 9.2 respectivement en connexion ou en déconnexion. D'autre part, la biellette 10 complémentaire étant mise en position par le ressort à torsion 22 qui la maintient en rotation anti-horaire contre la butée 23, son évidement en "U" 21, orienté suivant l'axe (XX') de la canalisation, permet l'arrivée ou le départ de l'axe 20.3 solidaire de la bielle 8.2. Ces deux évidements rendent ainsi possible le couplage et le découplage de la cinématique du dispositif, respectivement lors d'une connexion ou une déconnexion entre les embouts 4.1 et 4.2.

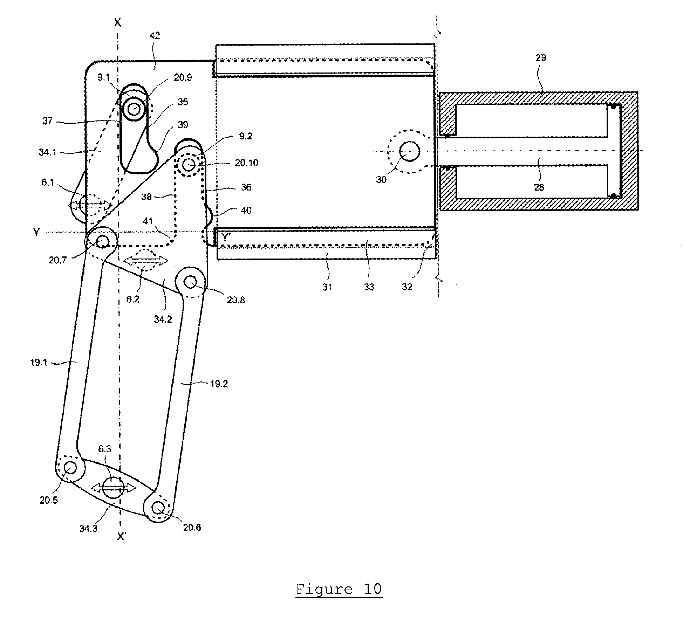

Les Figures 10 à 14 représentent schématiquement une deuxième solution du dispositif d'actionnement des robinets à papillons, mécanisme de transformation du déplacement du vérin de manoeuvre perpendiculairement à l'axe de la veine fluide en un pivotement conjoint des papillons des trois robinets, avec la possibilité de couplage et découplage de ce mécanisme respectivement lors d'une connexion ou déconnexion du système de transfert.

A l'extérieur de la canalisation, des bielles 34.1, 34.2 et 34.3 sont fixées respectivement à l'extrémité des arbres de manoeuvre 6.1, 6.2 et 6.3 des robinets à papillon. A une même extrémité des bielles 34.1 et 34.2 sont positionnés respectivement des galets 9.1 et 9.2 en liaison pivot respectivement autour des axes 20.9 et 20.10, de manière à ce que les segments de droite entre l'arbre de manoeuvre 6.1 et l'axe 20.9 d'une part, et par l'arbre de manoeuvre 6.2 et l'axe 20.10 d'autre part soient parallèles et de même longueur, et inclinés dans le sens horaire par rapport à l'axe (XX') de la veine fluide lorsque les robinets à papillon 5.1 et 5.2 sont en position fermée.

Une bielle 19.1 de liaison est montée en liaison pivot en une extrémité avec la bielle 34.2 triangulaire autour de l'axe 20.7, et également en liaison pivot en son autre extrémité avec la bielle 34.3 autour de l'axe 20.5, de manière à ce que les segments formés par les axes 6.2 et 20.7 d'une part et par les axes 6.3 et 20.5 d'autre part soient parallèles et de même longueur. Une bielle 19.2 de liaison est montée en liaison pivot en une extrémité avec la bielle 34.2 autour de l'axe 20.8, et également en liaison pivot en son autre extrémité avec la bielle 34.3 autour de l'axe 20.6, de manière à ce que les segments formés par les axes 6.2 et 20.8 d'une part et par les axes 6.3 et 20.6 d'autre part soient parallèles et de même longueur. Ainsi, les quadrilatères formés par les axes 6.2, 20.7, 20.5 et 6.3 d'une part, et par les axes 6.2, 20.8, 20.6 et 6.3 d'autre part représentent des parallélogrammes déformables. De préférence, les axes 20.7 et 20.8 sont situés à égale distance de l'arbre de manoeuvre 6.2, par conséquent les axes 20.5 et 20.6 sont de préférence situés à égale distance de l'arbre de manoeuvre 6.3.

Un vérin 29 (représenté en coupe) permet le déplacement d'une pièce de manoeuvre 42 par l'intermédiaire de son piston 28 relié à celle-ci par l'axe 30. La coopération entre les languettes 33 de la pièce de manoeuvre 42 et les rainures 32 du guide 31 solidaire de l'embout 4.1, confère à cette pièce de manoeuvre 42 un unique degré de liberté qui est un mouvement de translation perpendiculaire à l'axe (XX') de la veine fluide.

Cette pièce de manoeuvre 42 est dans le même plan que les galets 9.1 et 9.2. Pour des raisons d'encombrement, les bielles 34.1 et 34.2 ne peuvent pas être dans le même plan. Par rapport à l'axe (XX') de la veine fluide, la bielle 34.1 est par exemple située sous la pièce de manoeuvre 42, elle-même située sous la bielle 34.2, elle-même située sous les bielles 19.1 et 19.2.

Le galet 9.1 est initialement positionné dans l'évidement de la pièce de manoeuvre 42 situé entre les surfaces de contact 35 et 37.

Les flèches représentées au niveau des arbres de manoeuvre 6.1, 6.2 et 6.3 symbolisent la position des robinets à papillon correspondants par rapport à l'axe (XX') de la veine fluide. Le plan radial à l'axe de la canalisation passant par l'axe (YY') correspond à l'interface entre les embouts 4.1 et 4.2.

La Figure 10 représente le dispositif lorsque les embouts 4.1 et 4.2 sont connectés et les robinets à papillon 5.1, 5.2 et 5.3 fermés. La manoeuvre d'ouverture des robinets à papillon est provoquée par la translation vers la gauche de la pièce de manoeuvre 42. La surface de contact 35 de la pièce de manoeuvre 42 entraîne le galet 9.1, ce qui provoque la rotation dans le sens anti-horaire de la bielle 34.1 avec l'arbre de manoeuvre 6.1, et, dans le même temps, la surface de contact 36 de la pièce de manoeuvre 42 entraîne le galet 9.2, ce qui provoque également la rotation dans le sens anti-horaire de la bielle 34.2 avec l'arbre de manoeuvre 6.2, et la rotation de la bielle 34.3 avec l'arbre de manoeuvre 6.3 par l'intermédiaire des bielles 19.1 et 19.2.

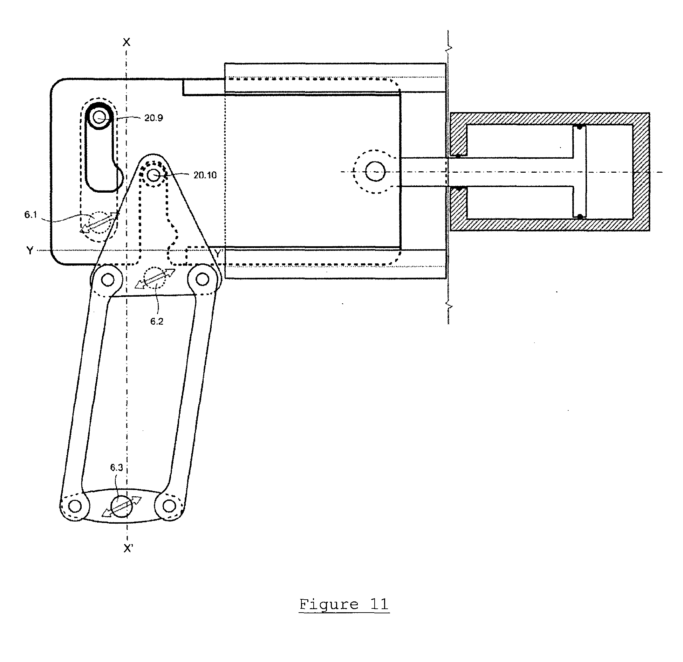

La Figure 11 représente le mécanisme dans un degré de rotation intermédiaire lorsque les segments formés par les axes 6.1 et 20.9 d'une part et 6.2 et 20.10 d'autre part sont parallèles à l'axe (XX') de la veine fluide.

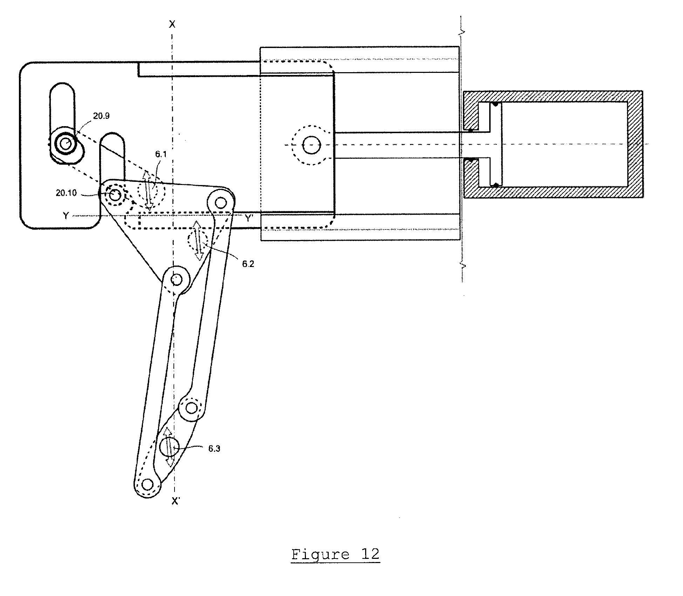

La Figure 12 représente le mécanisme dans un degré de rotation intermédiaire, peu avant l'ouverture complète des robinets à papillons 5.1, 5.2 et 5.3.

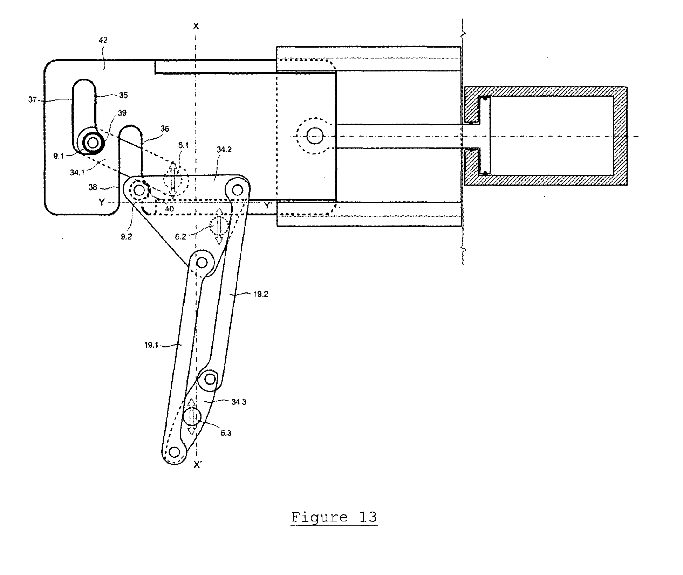

La Figure 13 représente le mécanisme en la position correspondant à la position ouverte des robinets à papillon, après la translation maximale vers la gauche de la pièce de manoeuvre 42. Dans cette position, des évidements en "U" 39 et 40 respectivement sur les surfaces de contact 35 et 36 de la pièce de manoeuvre 42, permettent d'améliorer le maintien en position des galets 9.1 et 9.2 en annulant les jeux fonctionnels entre galets et évidements. Par conséquent, les robinets à papillon 5.1, 5.2 et 5.3 restent parfaitement ouverts lors du transfert de fluide, empêchant toute oscillation induite par l'écoulement du fluide ou par leur propre poids.

Les robinets à papillon 5.1, 5.2 et 5.3 ainsi en position ouverte, une manoeuvre de fermeture des robinets est provoquée par le mouvement inverse, c'est-à-dire la translation vers la droite de la pièce de manoeuvre 42, dont la surface de contact 37 provoque la rotation dans le sens horaire de la bielle 34.1 par l'intermédiaire du galet 9.1, et dont la surface de contact 38 provoque dans le même temps la rotation identique de la bielle 34.2 par l'intermédiaire du galet 9.2. Comme en ouverture, ce mouvement entraîne la rotation identique de la bielle 34.3 par l'intermédiaire des bielles 19.1 et 19.2.

Un unique mouvement de translation de la pièce de manoeuvre 42 entraîne donc la rotation simultanée des trois robinets à papillon 5.1, 5.2 et 5.3 en ouverture comme en fermeture respectivement par l'intermédiaire des arbres de manoeuvre 6.1, 6.2 et 6.3.

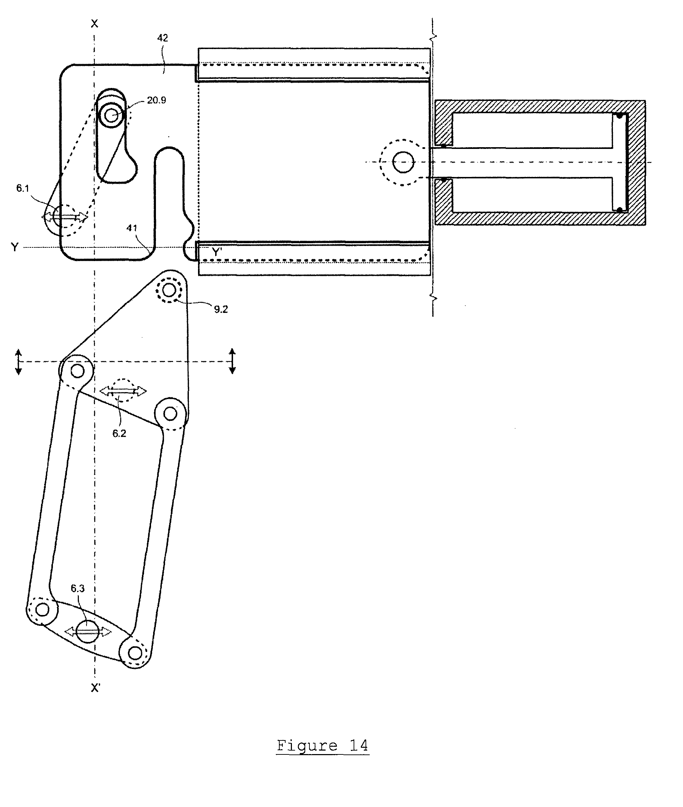

La Figure 14 représente le mécanisme lorsque les embouts 4.1 et 4.2 sont en fin d'approche en phase de connexion ou en début de manoeuvre de déconnexion du système de transfert, les robinets à papillons 5.1, 5.2 et 5.3 étant bien entendu fermés dès lors que les embouts 4.1 et 4.2 ne sont pas connectés. La cinématique du dispositif est donc disposée comme en Figure 10. L'évidement 41 de la pièce de manoeuvre 42 permet ainsi le départ ou l'arrivée du galet 9.2 respectivement lors d'une phase de connexion ou de déconnexion des embouts 4.1 et 4.2.

Dans le cas présent d'un connecteur regroupant les dispositifs QC/DC et ERS en une seule interface, le système de guidage (non représenté) permet d'assurer la coaxialité entre les deux embouts 4.1 et 4.2 et donc le parfait alignement entre le galet 9.2 et l'évidement de la pièce de manoeuvre 42 situé entre les surfaces de contact 36 et 38, que ce soit en phase de connexion ou de déconnexion (de service ou d'urgence).

Dans le cas non représenté d'un connecteur "classique" séparant distinctement les dispositifs de connexion/déconnexion de service et de déconnexion d'urgence, la séparation entre les le galet 9.2 et la pièce de manoeuvre 42 est uniquement réalisée en cas de déconnexion d'urgence. Dans ce cas, le connecteur GNL (dont le système de guidage n'est effectif qu'en opérations de service) et le système d'actionnement de ses robinets devront être agencés de manière à réaliser une séparation d'urgence sans blocage.

Cette deuxième solution d'actionnement est préférée à la première d'un point de vue mécanique car la pièce de manoeuvre agit directement sur les deux arbres de manoeuvre 6.1 et 6.2 durant toute la course d'ouverture et de fermeture, contrairement à la première solution qui nécessite notamment l'emploi d'une bielle intermédiaire.

Dans les deux solutions présentées précédemment, il est également possible d'inverser le positionnement des galets et des évidements pour réaliser le même mouvement. En appliquant, par exemple, cette modification à la deuxième solution proposée, les galets sont implantés sur la pièce de manoeuvre, qui garde son mouvement perpendiculaire à l'axe de la veine fluide, alors que les évidements, qui coopèrent avec les galets, sont positionnés dans les bielles solidaires des arbres de manoeuvre des robinets à papillon.

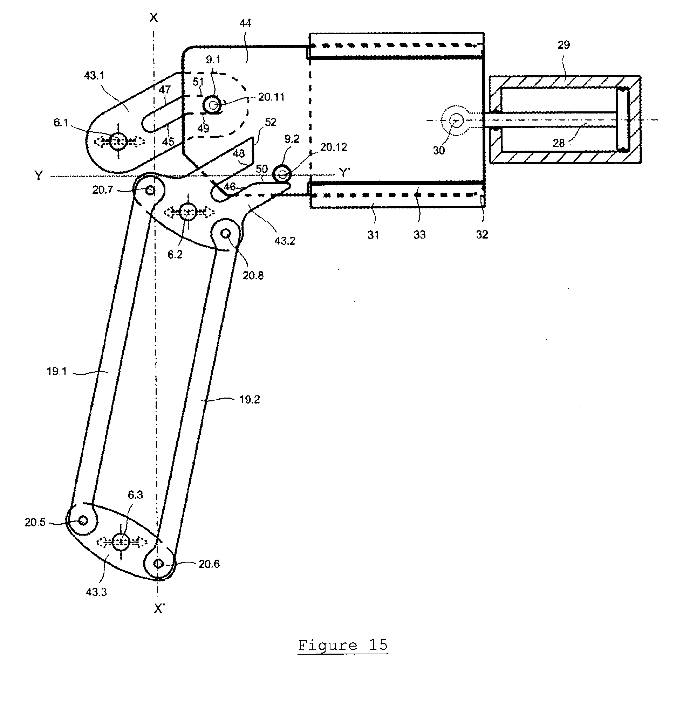

Les Figures 15 à 21 représentent donc schématiquement une nouvelle solution du dispositif d'actionnement des robinets à papillons, mécanisme de transformation du déplacement du vérin de manoeuvre perpendiculairement à l'axe de la veine fluide en un pivotement conjoint des papillons des trois robinets, avec la possibilité de couplage et de découplage de ce mécanisme respectivement, lors d'une connexion ou déconnexion du système de transfert.

A l'extérieur de la canalisation, des bielles 43.1, 43.2 et 43.3 sont fixées respectivement à l'extrémité des arbres de manoeuvre 6.1, 6.2 et 6.3 des robinets à papillon. A une même extrémité des bielles 43.1 et 43.2 sont positionnés respectivement un évidement formé par les surfaces de contact 45, 47, 49 et 51 et un évidement débouchant formé par les surfaces de contact 46, 48 ,50 et 52.

Un vérin 29 (représenté en coupe) permet le déplacement d'une pièce de manoeuvre 44 par l'intermédiaire de son piston 28 relié à celle-ci par l'axe 30. La coopération entre les languettes 33 de la pièce de manoeuvre 44 et les rainures 32 du guide 31 solidaire de l'embout 4.1, confère à cette pièce de manoeuvre 44 un unique degré de liberté qui est un mouvement de translation perpendiculaire à l'axe (XX') de la veine fluide.

La pièce de manoeuvre 44 possède des galets 9.1 et 9.2 montés en liaison pivot respectivement autour des axes 20.11 et 20.12, de manière à ce que les segments de droite entre l'arbre de manoeuvre 6.1 et l'axe 20.11, d'une part, et entre l'arbre de manoeuvre 6.2 et l'axe 20.12 d'autre part, soient parallèles et de même longueur et, de préférence, inclinés dans le sens horaire par rapport à l'axe (XX') de la veine fluide, lorsque les robinets à papillon 5.1 et 5.2 sont en position fermée.

Le galet 9.1 est initialement positionné dans l'évidement de la bielle 43.1 formé par les surfaces de contact 45, 47, 49 et 51. Le galet 9.2 est quand à lui amené à coopérer avec l'évidement débouchant de la bielle 43.2 formé par les surfaces de contact 46, 48, 50 et 52.

Une bielle 19.1 de liaison est montée en liaison pivot en une extrémité avec la bielle 43.2 autour de l'axe 20.7, et également en liaison pivot en son autre extrémité avec la bielle 43.3 autour de l'axe 20.5, de manière à ce que les segments formés par les axes 6.2 et 20.7, d'une part, et par les axes 6.3 et 20.5, d'autre part, soient parallèles et de même longueur. Une bielle 19.2 de liaison est montée en liaison pivot en une extrémité avec la bielle 43.2 autour de l'axe 20.8 et également en liaison pivot en son autre extrémité avec la bielle 43.3 autour de l'axe 20.6, de manière à ce que les segments formés par les axes 6.2 et 20.8, d'une part, et par les axes 6.3 et 20.6, d'autre part, soient parallèles et de même longueur. Ainsi, les quadrilatères formés par les axes 6.2, 20.7, 20.5 et 6.3, d'une part, et par les axes 6.2, 20.8, 20.6 et 6.3, d'autre part, représentent des parallélogrammes déformables. De préférence, les axes 20.7 et 20.8 sont situés à égale distance de l'arbre de manoeuvre 6.2, par conséquent les axes 20.5 et 20.6 sont, de préférence, situés à égale distance de l'arbre de manoeuvre 6.3.

Pour des raisons d'encombrement, les bielles 43.1 et 43.2 ne peuvent être dans le même plan. Par rapport à l'axe (XX') de la veine fluide, la bielle 43.1 et le galet 9.1 sont, par exemple, situés sous la pièce de manoeuvre 44, elle-même située sous la bielle 43.2 et le galet 9.2, eux-mêmes situés sous les bielles 19.1 et 19.2.

Les flèches représentées au niveau des arbres de manoeuvre 6.1, 6.2 et 6.3 symbolisent la position des robinets à papillon correspondants par rapport à l'axe (XX') de la veine fluide. Le plan radial à l'axe de la canalisation passant par l'axe (YY') correspond à l'interface entre les embouts 4.1 et 4.2.

La Figure 15 représente le dispositif lorsque les embouts 4.1 et 4.2 sont connectés et les robinets à papillon 5.1, 5.2 et 5.3 fermés. Les surfaces de contact 49 et 51 de la bielle 43.1 et la face 50 de la bielle 43.2 sont, dans ce cas, parallèles à l'axe de déplacement du vérin 28, 29 et donc de la pièce de manoeuvre 44, de manière à ce que, après la fermeture complète des robinets, une rentrée supplémentaire du piston 28 du vérin 29 libère complètement le galet 9.2, pour ainsi permettre une séparation entre les embouts 4.1 et 4.2 parallèlement à l'axe (XX') de la veine fluide.

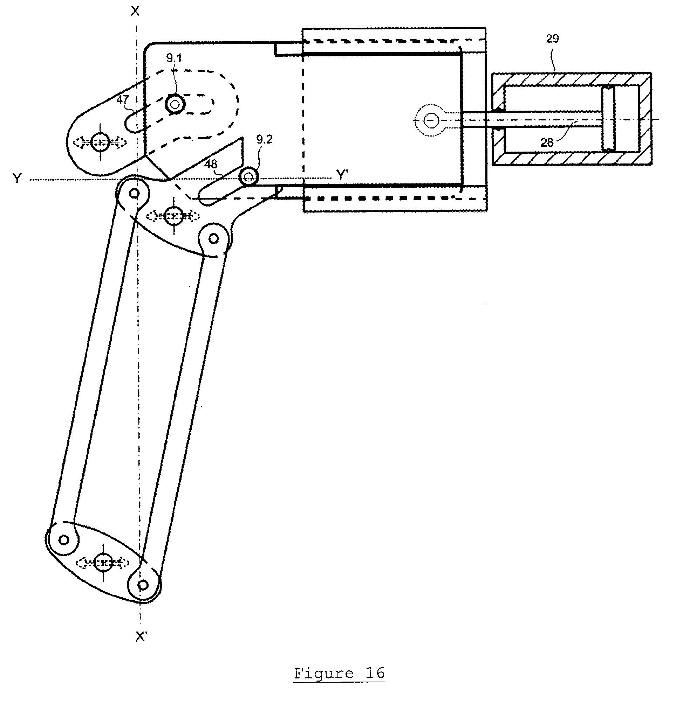

La Figure 16 représente le dispositif toujours lorsque les embouts 4.1 et 4.2 sont connectés et les robinets à papillon 5.1, 5.2 et 5.3 fermés mais, suite à un déplacement en sortie du piston 28 du vérin 29, jusqu'à ce que les galets 9.1 et 9.2 entrent respectivement en contact avec les surfaces de contact 47 et 48.

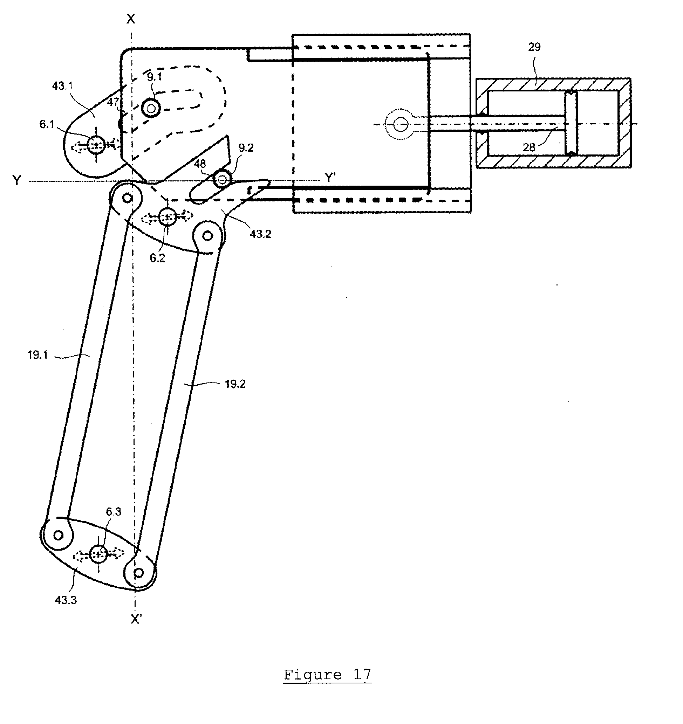

La Figure 17 représente le dispositif après une sortie supplémentaire du piston 28 du vérin 29, qui permet aux galets 9.1 et 9.2 d'entrer respectivement en contact avec les surfaces de contact 47 et 48 et donc d'entraîner la rotation dans le sens anti-horaire de la bielle 43.1 et de l'arbre 6.1 et, dans le même temps, de la bielle 43.2 et de l'arbre de manoeuvre 6.2, ce qui provoque également, dans le même temps, la rotation dans le sens anti-horaire de la bielle 43.3 et de l'arbre 6.3 par l'intermédiaire des bielles 19.1 et 19.2 de liaison.

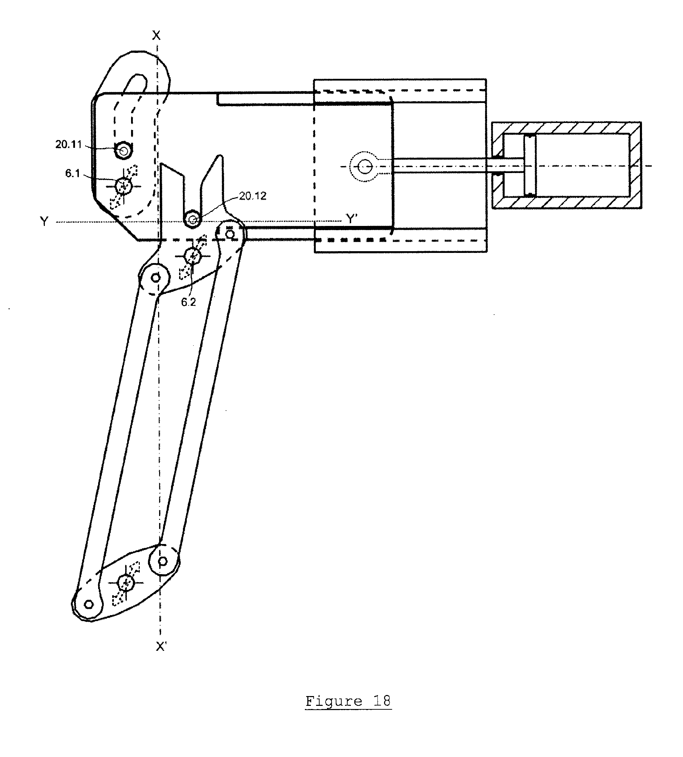

La Figure 18 représente le dispositif dans un degré de rotation intermédiaire, lorsque les segments formés par les axes 6.1 et 20.11 d'une part et 6.2 et 20.12 d'autre part sont parallèles à l'axe (XX') de la veine fluide.

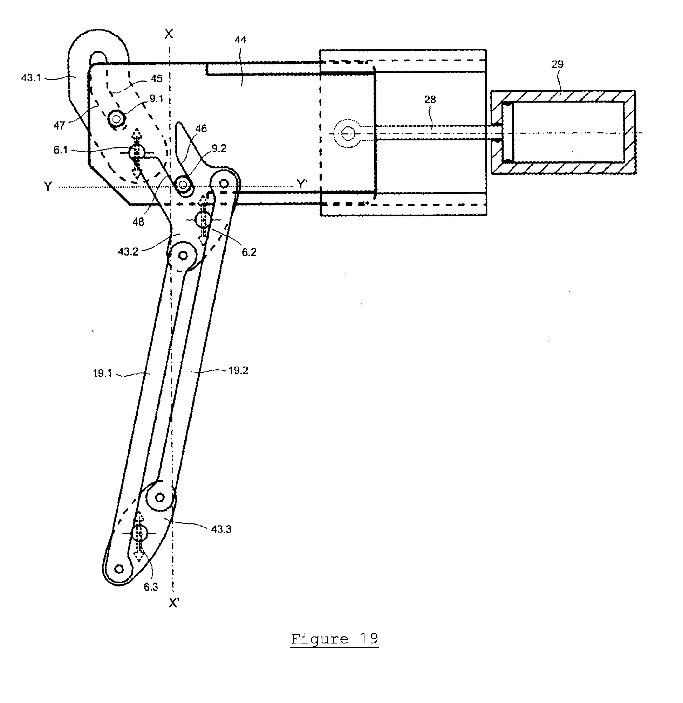

La Figure 19 représente le dispositif en la position correspondant à la position ouverte des robinets à papillon suite à la sortie maximale du piston 28 du vérin 29. Dans cette position, à la différence des solutions précédentes, un évidement en "U" permettant d'assurer la position des robinets en position ouverte n'est pas nécessaire du fait que la direction du contact entre les galets 9.1 et 9.2 et les surfaces de contact respectives 47 et 48 est radiale.

Les robinets à papillon 5.1, 5.2 et 5.3 ainsi en position ouverte, une manoeuvre de fermeture des robinets est provoquée par le mouvement inverse, c'est-à-dire la rentrée du piston 28 du vérin 29 et donc la translation vers la droite de la pièce de manoeuvre 44, dont la surface de contact 45 provoque la rotation dans le sens horaire de la bielle 43.1 par l'intermédiaire du galet 9.1, et dont la surface de contact 46 provoque dans le même temps la rotation identique de la bielle 43.2 par l'intermédiaire du galet 9.2. Comme en ouverture, ce mouvement entraîne la rotation identique de la bielle 43.3 par l'intermédiaire des bielles 19.1 et 19.2.

Un unique mouvement de translation de la pièce de manoeuvre 44 entraîne donc la rotation simultanée des trois robinets à papillon 5.1, 5.2 et 5.3 en ouverture comme en fermeture respectivement par l'intermédiaire des arbres de manoeuvre 6.1, 6.2 et 6.3.

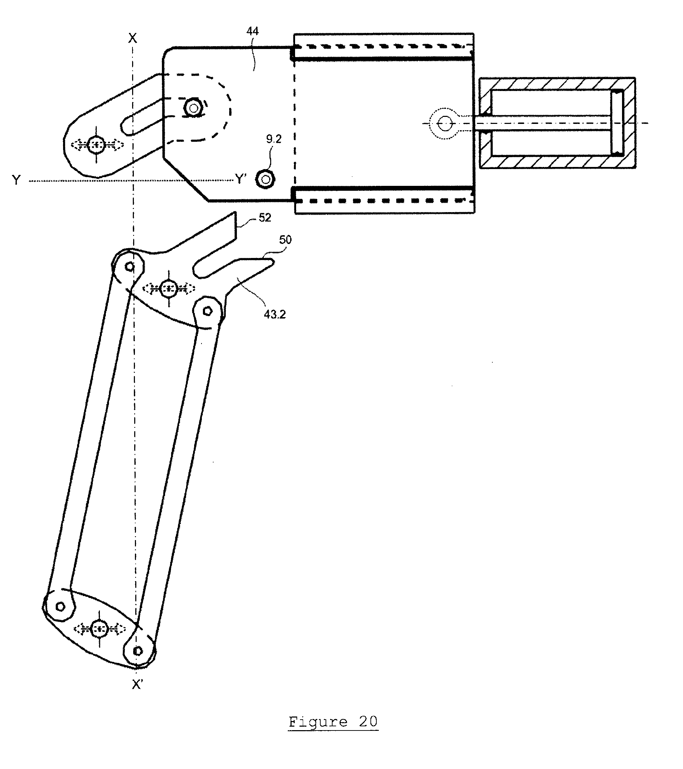

La Figure 20 représente le dispositif lorsque les embouts 4.1 et 4.2 sont en fin d'approche en phase de connexion ou en début de manoeuvre de déconnexion du système de transfert, les robinets à papillons 5.1, 5.2 et 5.3 étant bien entendu fermés dès lors que les embouts 4.1 et 4.2 ne sont pas connectés. La cinématique du dispositif est donc disposée comme en Figure 15. L'évidement de la bielle 43.2 situé entre les faces 50 et 52 permet ainsi le départ ou l'arrivée du galet 9.2 respectivement lors d'une phase de connexion ou de déconnexion des embouts 4.1 et 4.2.

Dans le cas présent d'un connecteur regroupant les dispositifs QC/DC et ERS en une seule interface, le système de guidage (non représenté) permet d'assurer la coaxialité entre les deux embouts 4.1 et 4.2 et donc le parfait alignement entre le galet 9.2 et l'évidement de la bielle 43.2 situé entre les faces 50 et 52, que ce soit en phase de connexion ou de déconnexion (de service ou d'urgence).

Dans le cas non représenté d'un connecteur "classique" séparant distinctement les dispositifs de connexion/déconnexion de service et de déconnexion d'urgence, la séparation entre le galet 9.2 et la pièce de manoeuvre 44 est uniquement réalisée en cas de déconnexion d'urgence. Dans ce cas, le connecteur GNL (dont le système de guidage n'est effectif qu'en opérations de service) et le système d'actionnement de ses robinets devront être agencés de manière à réaliser une séparation d'urgence sans blocage.

Cette dernière solution d'actionnement conserve tous les avantages de la deuxième solution proposée. De plus, après la fin de la fermeture des robinets à papillon, une rentrée supplémentaire du piston 28 du vérin 29 permet de libérer le galet 9.2 en vue d'une déconnexion du système de transfert. Le fait qu'après la fermeture complète des robinets à papillon, une translation supplémentaire de la pièce de manoeuvre n'affecte pas la position des papillons, permet de réaliser facilement un système de blocage des papillons en position fermée. Egalement, il est ainsi plus aisé de réaliser un interlock mécanique consistant à permettre l'ouverture d'un collier (usuellement appelé ERC) de déconnexion entre les deux embouts uniquement lorsque les robinets sont fermés, dans le cadre d'un connecteur-déconnecteur de type "classique".

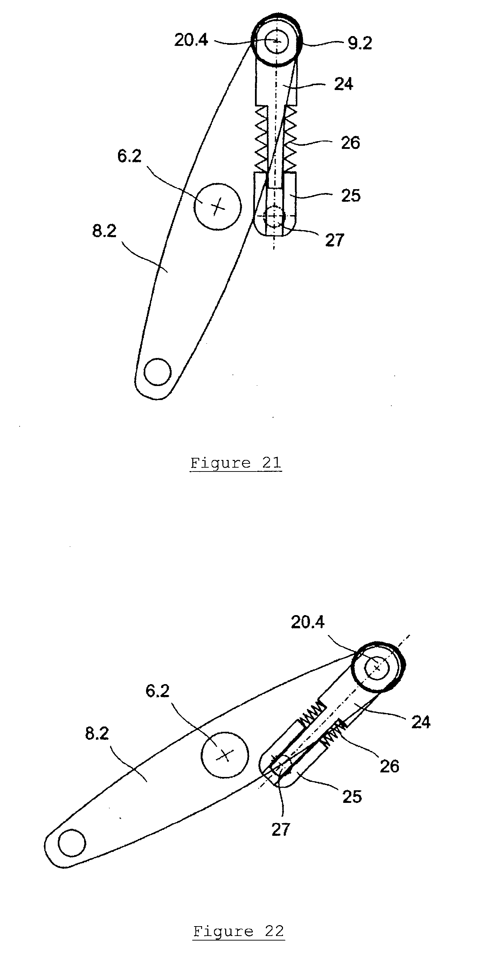

Un dispositif complémentaire est ainsi intégré à au moins une des bielles en liaison avec les robinets à papillon 5.2 ou 5.3 (leur actionnement étant lié) de manière à ce qu'à la suite d'une déconnexion du connecteur-déconnecteur 4, les robinets à papillons positionnés sur l'embout 4.2, ainsi découplés de leur actionnement positionné sur l'embout 4.1, soient maintenus en position fermés pour empêcher tout déversement du fluide dans l'environnement. Ce dispositif de maintien en fermeture est présenté schématiquement en Figures 21, 22, 23 et 24 par exemple au niveau de la bielle 8.2 qui permet la manoeuvre du robinet à papillon 5.2 par l'intermédiaire de l'arbre de manoeuvre 6.2. Celle-ci ainsi que le galet 9.2 sont mis en transparence pour simplifier la représentation étant donné que le dispositif de maintien en fermeture est positionné dans un plan inférieur aux bielles 8.1 et 8.2 pour ne pas entrer en interaction avant la pièce de manoeuvre 11.

Un arbre 24, positionné en liaison pivot en une extrémité par rapport à la bielle 8.2 par exemple autour de l'axe 20.4, coulisse en son autre extrémité dans la rainure d'un alésage 25 en pivot autour d'un axe fixe 27 parallèle aux axes 6.2 et 20.4, et positionné de manière à ce que les axes 6.2, 26 et 20.4 soient alignés seulement quelques degrés de rotation avant la position fermée du robinet papillon 5.2. Un ressort 26, positionné sur l'arbre 24 entre l'épaulement de l'arbre 24 et l'alésage 25, permet notamment de reprendre les variations de distance entre les axes 20.4 et 27 au cours de la rotation de la bielle 8.2.

La Figure 21 représente le mécanisme lorsque la position de la bielle 8.2 correspond à la position ouverte du robinet à papillon 5.2. Le ressort 26 est dans ce cas décomprimé.

Une manoeuvre de fermeture des robinets à papillon entraîne la rotation dans le sens horaire de la bielle 8.2 ce qui provoque d'une part le coulissement de l'arbre 24 à travers la rainure de l'alésage 25 en même temps que la rotation de l'alésage 25 dans le sens horaire autour de son axe 27, et d'autre part la compression du ressort 26 du fait du rapprochement des axes 20.4 et 27. La Figure 22 représente ainsi le mécanisme dans un degré de rotation intermédiaire.

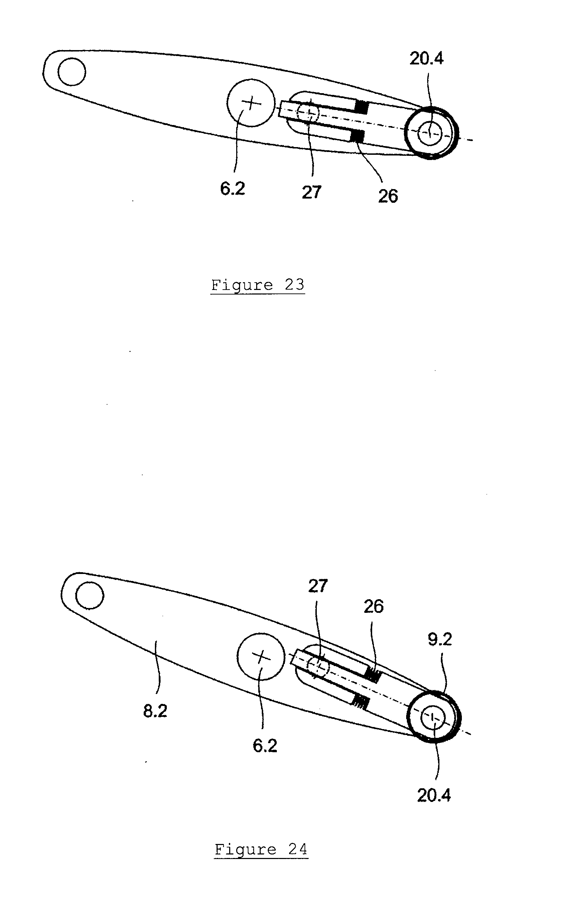

La Figure 23 représente le mécanisme à quelques degrés de rotation seulement avant la fin de fermeture, où les axes 6.2, 27 et 20.4 sont alignés. Les axes 20.4 et 27 étant dans leur position la plus rapprochée au cours du mouvement, le ressort 26 est en compression maximale.

La Figure 24 représente le mécanisme lorsque le robinet à papillon 5.2 est en position fermée, la bielle 8.2 est donc dans son degré de rotation maximal dans le sens horaire. Le ressort 26 est à présent en partie décomprimé, la distance entre les axes 27 et 20.4 étant plus importante qu'à la Figure 23. L'axe 20.4 est donc en dessous de la droite formée par les axes 6.2 et 27, ce qui correspond au blocage de la cinématique par arc-boutement mécanique, le "point mort" présenté en Figure 23 étant dépassé.

Ainsi, lorsque l'embout 4.2 se détache de l'embout 4.1 sur lequel est positionnée la pièce de manoeuvre 11, les robinets à papillon 5.2 et 5.3 de l'embout 4.2, qui ne sont plus à la portée de la pièce de manoeuvre 11 par l'intermédiaire du galet 9.2, sont maintenus fermés, le robinet à papillon 5.1 de l'embout 4.1 étant pour sa part maintenu fermé par l'action de la pièce de manoeuvre sur le galet 9.1. L'ensemble du mécanisme ayant un carénage de protection (non représenté) afin d'éviter tout contact avec des éléments extérieurs pouvant le dés-arc-bouter, seule la pièce de manoeuvre 11 est ainsi en mesure, après une reconnexion entre les deux embouts 4.1 et 4.2, de vaincre la compression du ressort 26 jusqu'au "point mort" de la Figure 23 pour rouvrir les robinets à papillon 5.1, 5.2 et 5.3.

## Revendications

1. Installation de transfert de fluide, comprenant une canalisation (3) flottante cryogénique flexible mettant un bâtiment (1) de navigation en communication avec un autre bâtiment (2) et ayant un premier embout (4.1) du côté du bâtiment de navigation et un second embout (4.2) du côté de l'autre bâtiment, à l'extrémité du flexible cryogénique (3), d'un connecteur-déconnecteur (4) monté sur un tronçon sensiblement vertical de la canalisation et ayant le premier embout (4.1) au-dessus du second embout, (4.2), un premier robinet (5.1) à arbre (6.1) de manoeuvre étant monté à l'extrémité du premier embout (4.1) tournée vers le second embout (4.2) et un deuxième robinet (5.2) à arbre (6.2) de manoeuvre étant monté à l'extrémité du second embout (4.2) tournée vers le premier robinet (5.1), **caractérisée en ce que** les robinets sont actionnés par un seul vérin qui leur est commun et il est prévu un mécanisme de transformation du déplacement en translation du vérin (28, 29) en un pivotement conjoint des arbres (6.1, 6.2) de manoeuvre des robinets (5.1, 5.2), le mécanisme de transformation étant composé de deux parties, la première solidaire du premier embout (4.1), la seconde du second embout (4.2), qui sont agencées de manière à pouvoir se coupler ou se désaccoupler respectivement lorsque le connecteur-déconnecteur (4) se connecte ou se déconnecte.

2. Installation suivant la revendication 1, **caractérisée en ce que** la première et la seconde parties du mécanisme de transformation ne sont en contact qu'en un ou deux points.

3. Installation suivant la revendication 1 ou 2, **caractérisée par** un troisième robinet (5.3) actionné par le vérin commun et à arbre (6.3) de manoeuvre monté à l'autre extrémité du second embout (4.2) en ayant son arbre (6.3) de manoeuvre parallèle à ceux des autres robinets (5.1, 5.2).

4. Installation suivant l'une des revendications 1 à 3, **caractérisée en ce qu'**il est prévu une pièce de manoeuvre (11, 42, 44), qui est montée sur le premier embout (4.1) mobile seulement en translation, qui est associée en commun aux robinets (5.1, 5.2, 5.3) et à laquelle le vérin (28, 29) applique une force de déplacement.

5. Installation suivant la revendication 4, **caractérisée en ce que** :
- la première bielle (43.1), solidaire en rotation de l'arbre (6.1) de manoeuvre du premier robinet (5.1), définit un premier évidement (45, 47, 49, 51), et
- la deuxième bielle (43.2), solidaire en rotation de l'arbre (6.2) de manoeuvre du deuxième robinet (5.2), définit un deuxième évidement (46, 48, 50, 52) débouchant,
- le mécanisme de transformation du déplacement de la pièce (42) comprend :
- un premier galet (9.1) monté roulant dans le premier évidement (45, 47, 49, 51) autour d'un premier axe (20.11) de pivotement situé sur la pièce de manoeuvre (44),
- un deuxième galet (9.2) monté roulant dans le deuxième évidement (46, 48, 50, 52) débouchant, autour d'un deuxième axe (20.12) de pivotement situé sur la pièce de manoeuvre (44),
- les segments de droite entre l'arbre (6.1) de manoeuvre et le premier axe (20.11) de pivotement, d'une part, et l'arbre (6.2) de manoeuvre et le deuxième axe de pivotement (20.12), d'autre part, sont parallèles, de même longueur et, de préférence, inclinés dans le sens horaire par rapport à l'axe de la canalisation (XX'), lorsque les deux robinets (5.1, 5.2) sont en position fermée,
- deux bielles (19.1, 19.2) de liaison, en un parallélogramme articulé, de la deuxième bielle (43.2) à une troisième bielle (43.3), qui est solidaire en rotation de l'arbre (6.3) de manoeuvre du troisième robinet (5.3).

6. Installation suivant la revendication 4, **caractérisée en ce que** :
- la pièce (42) de manoeuvre définit un premier évidement (35, 37) fermé et, débouchant à l'extérieur, un deuxième évidement (36, 38, 41),
- le mécanisme de transformation du déplacement de la pièce (42) comprend :
- un premier galet (9.1) monté roulant dans le premier évidement (35, 37) autour d'un premier axe (20.9) de pivotement situé à l'une des extrémités d'une première bielle (34.1) solidaire en rotation de l'arbre (6.1) de manoeuvre du premier robinet (5.1),
- un deuxième galet (9.2) monté roulant dans le deuxième évidement (36, 38, 41) autour d'un deuxième axe (20.10) de pivotement situé à l'une des extrémités d'une deuxième bielle (34.2) solidaire en rotation de l'arbre (6.2) de manoeuvre du deuxième robinet (5.2),
- les segments de droite entre l'arbre (6.1) de manoeuvre et le premier axe (20.9) de pivotement, d'une part, et l'arbre (6.2) de manoeuvre et le deuxième axe de pivotement (20.10), d'autre part, sont parallèles, de même longueur et inclinés dans le sens horaire par rapport à l'axe de la canalisation, lorsque les deux robinets (5.1, 5.2) sont en position fermée,
- deux bielles (19.1, 19.2) de liaison, en un parallélogramme articulé, de la deuxième bielle (34.2) à une troisième bielle (34.3), qui est solidaire en rotation de l'arbre (6.3) de manoeuvre du troisième robinet (5.3).

7. Installation suivant la revendication 4, **caractérisée en ce que** :
- la pièce (11) de manoeuvre définit un premier évidement (12, 16) fermé et, débouchant à l'extérieur, un second évidement (13, 17, 18),
- le mécanisme de transformation du déplacement de la pièce comprend :
- un premier galet (9.1) monté roulant dans le premier évidement (12, 16) autour d'un axe (20.2) de pivotement situé à l'une des extrémités d'une première bielle (8.1) solidaire en rotation de l'arbre (6.1) de manoeuvre du premier robinet (5.1),
- un deuxième galet (9.2) monté roulant dans le second évidement (13, 17, 18) autour d'un axe (20.4) de pivotement situé à l'une des extrémités d'une deuxième bielle (8.2) solidaire en rotation de l'arbre (6.2) de manoeuvre du deuxième robinet (5.2),
- deux bielles (19.1, 19.2) de liaison, en un parallélogramme articulé, de la deuxième bielle (8.2) à une troisième bielle (8.3), qui est solidaire en rotation de l'arbre (6.3) de manoeuvre du troisième robinet (5.3), les première, deuxième et troisième bielles (8.1, 8.2, 8.3) étant parallèles et de même longueur, et
- une biellette (10) complémentaire, articulée par l'une de ses extrémités à l'extrémité de la première bielle (8.1) autre que celle ayant le premier galet (9.1) et comportant à son autre extrémité un évidement (21) d'articulation amovible de la biellette (10) complémentaire à l'extrémité de la deuxième bielle (8.2) autre que celle ayant le second galet (9.2), la longueur de la biellette (10) complémentaire, décomptée entre ses axes d'articulation, étant égale à l'entraxe des deux galets (9.1, 9.2).

8. Installation suivant la revendication 6 ou 7, **caractérisée en ce que** la direction de roulement des galets dans les évidements (12, 16) et (13, 17) ou (35, 37) et (36, 38) est perpendiculaire à la direction de déplacement de la pièce (11 ou 42) de manoeuvre.

9. Installation suivant l'une des revendications 6 à 8, **caractérisée par** un moyen mécanique maintenant les trois robinets en position ouverte pendant le transfert, ce moyen étant notamment réalisé par le fait que la pièce de manoeuvre (11 ou 42) définit, dans chaque évidement, une cavité (14, 15) ou (39, 40) s'étendant du côté opposé à l'arbre de manoeuvre correspondant (6.1 ou 6.2).

10. Installation suivant l'une des revendications 6 à 9, **caractérisée en ce que** les première et deuxième bielles (8.1, 8.2) sont inclinées par rapport à l'axe de déplacement de la pièce de manoeuvre (11, 42), lorsque les robinets sont ouverts.

11. Installation suivant l'une des revendications 7 à 10, **caractérisée en ce que** :
- une butée (23) est fixée sur la première bielle (8.1) entre l'extrémité de la première bielle (8.1) autre que celle où est monté le premier galet (9.1) et le point où la première bielle (8.1) est rendue solidaire de l'arbre (6.1) de manoeuvre du premier robinet, et
- un ressort (22) maintient la biellette (10) complémentaire sur la butée (23) lorsque les embouts sont séparés l'un de l'autre.

12. Installation suivant la revendication 3, ou bien suivant la revendication 3 et l'une des revendications 4 à 10,
**caractérisée par** un système mécanique de maintien en fermeture des trois robinets lorsque les deux embouts sont séparés.

13. Installation suivant la revendication 12, **caractérisée en ce que** le système mécanique de maintien en fermeture des trois robinets comprend un arbre (24), positionné en liaison pivot en une extrémité par rapport à la deuxième bielle (8.2), qui coulisse en son autre extrémité dans la rainure d'un alésage (25) en pivot autour d'un axe fixe (27) parallèle aux axes (6.2) et (20.4), et positionné de manière à ce que les axes (6.2), (27) et (20.4) soient alignés dans cet ordre seulement quelques degrés de rotation avant la position fermée des robinets, un ressort (26), positionné sur l'arbre (24) entre l'épaulement de l'arbre (24) et l'alésage (25), permettant de reprendre les variations de distance entre les axes (20.4) et (27) au cours de la rotation de la deuxième bielle (8.2), et de réaliser la fonction d'arc-boutement.

14. Installation suivant la revendication 5, **caractérisée en ce que** le deuxième galet (9.2) est libéré de l'évidement réalisé par les surfaces (46, 48) de contact grâce à un déplacement supplémentaire de la pièce de manoeuvre (44) n'agissant pas sur la position fermée des robinets par le fait que les évidements formés par les surfaces (49, 51) et (50) de contact sont parallèles à l'axe de déplacement de la pièce (44) de manoeuvre.

## Patentansprüche

1. Fluidtransportanlage, umfassend eine schwimmende flexible Kryoleitung (3), die ein Schiffstruktur(1) mit einem anderen Struktur (2) in Verbindung bringt und ein erstes Anschlussstück (4.1) auf der Seite des Schiffstrukturs sowie ein zweites Anschlussstück (4.2) auf der Seite des anderen Struktur, am Ende der flexiblen Kryoleitung (3), eines Verbinders/Trenners (4) aufweist, welcher an einem im Wesentlichen vertikalen Abschnitt der Leitung angebracht ist und dessen erstes Anschlussstück (4.1) sich oberhalb des zweiten Anschlussstücks (4.2) befindet, wobei ein erstes Ventil (5.1) mit Betätigungsachse (6.1) an dem dem zweiten Anschlussstück (4.2) zugewandten Ende des ersten Anschlussstücks (4.1) angebracht ist und ein zweites Ventil (5.2) mit Betätigungsachse (6.2) an dem dem ersten Ventil (5.1) zugewandten Ende des zweiten Anschlussstücks (4.2) angerbracht ist, **dadurch gekennzeichnet, dass** die Ventile durch einen einzigen Zylinder, der ihnen gemein ist, betätigt werden, und ein Mechanismus zur Umwandlung der Verschiebebewegung des Zylinders (28, 29) in ein gemeinsames Verschwenken der Achsen (6.1, 6.2) zur Betätigung der Ventile (5.1, 5.2) vorgesehen ist, wobei der Umwandlungsmechanismus aus zwei Teilen, wobei der erste mit dem ersten Anschlussstück (4.1), der zweite mit dem zweiten Anschlussstück (4.2) fest verbunden ist, besteht, die derart angeordnet sind, dass sie sich verbinden bzw. lösen können, wenn der Verbinder/Trenner (4) verbindet oder trennt.

2. Anlage nach Anspruch 1, **dadurch gekennzeichnet, dass** der erste und der zweite Teil des Umwandlungsmechanismus nur an einer oder zwei Stellen in Kontakt sind.

3. Anlage nach Anspruch 1 oder 2, **gekennzeichnet durch** ein **durch** den gemeinsamen Zylinder betätigtes drittes Ventil (5.3) mit Betätigungsachse (6.3), das an dem anderen Ende des zweiten Anschlussstücks (4.2) angebracht ist und dabei seine Betätigungsachse (6.3) parallel zu denjenigen der anderen Ventile (5.1, 5.2) verläuft.

4. Anlage nach einem der Ansprüche 1 bis 3, **dadurch gekennzeichnet, dass** ein Betätigungsteil (11, 42, 44) vorgesehen ist, dass an dem ersten Anschlussstück (4.1) -lediglich verschiebebeweglich- angebracht ist, das den Ventilen (5.1, 5.2, 5.3) gemeinsam zugeordnet ist und an den der Zylinder (28, 29) eine Bewegungskraft anlegt.

5. Anlage nach Anspruch 4, **dadurch gekennzeichnet, dass**:
- die erste Schubstange (43.1), die mit der Betätigungsachse (6.1) des ersten Ventils (5.1) drehfest verbunden ist, eine erste Ausnehmung (45, 47, 49, 51) definiert und
- die zweite Schubstange (43.2), die mit der Betätigungsachse (6.2) des zweiten Ventils (5.2) drehfest verbunden ist, eine zweite ausmündende Ausnehmung (46, 48, 50, 52) definiert,
- der Mechanismus zur Umwandlung der Bewegung des Teils (42) umfasst:
- eine erste Rolle (9.1), die in der ersten Ausnehmung (45, 47, 49, 51) um eine an dem Betätigungsteil (44) befindliche erste Schwenkachse (20.11) rollend angebracht ist,
- eine zweite Rolle (9.2), die in der zweiten ausmündenden Ausnehmung (46, 48, 50, 52) um eine an dem Betätigungsteil (44) befindliche zweite Schwenkachse (20.12) rollend angebracht ist,
- die Geradensegmente zwischen der Betätigungsachse (6.1) und der ersten Schwenkachse (20.11) einerseits sowie der Betätigungsachse (6.2) und der zweiten Schwenkachse (20.12) andererseits verlaufen parallel, sind von gleicher Länge und vorzugsweise im Uhrzeigersinn gegenüber der Achse der Leitung (XX') geneigt, wenn die beiden Ventile (5.1, 5.2) sich in der geschlossenen Position befinden,
- zwei Schubstangen (19.1, 19.2) zum Verbinden der zweiten Schubstange (43.2) mit einer dritten Schubstange (43.3), welche mit der Betätigungsachse (6.3) des dritten Ventils (5.3) drehfest verbunden ist, zu einem Gelenkparallelogramm.

6. Anlage nach Anspruch 4, **dadurch gekennzeichnet, dass**:
- das Betätigungsteil (42) eine geschlossene erste Ausnehmung (35, 37) und, sich außen öffnend, eine zweite Ausnehmung (36, 38, 41) definiert,
- der Mechanismus zur Umwandlung der Bewegung des Teils (42) umfasst:
- eine erste Rolle (9.1), die in der ersten Ausnehmung (35, 37) um eine erste Schwenkachse (20.9), welche an einem der Enden einer mit der Betätigungsachse (6.1) des ersten Ventils (5.1) drehfest verbundenen ersten Schubstange (34.1) gelegen ist, rollend angebracht ist,
- eine zweite Rolle (9.2), die in der zweiten Ausnehmung (36, 38, 41) um eine zweite Schwenkachse (20.10), welche an einem der Enden einer mit der Betätigungsachse (6.2) des zweiten Ventils (5.2) drehfest verbundenen zweiten Schubstange (34.2) gelegen ist, rollend angebracht ist,
- die Geradensegmente zwischen der Betätigungsachse (6.1) und der ersten Schwenkachse (20.9) einerseits sowie der Betätigungsachse (6.2) und der zweiten Schwenkachse (20.10) andererseits verlaufen parallel, sind von gleicher Länge und im Uhrzeigersinn gegenüber der Achse der Leitung geneigt, wenn die beiden Ventile (5.1, 5.2) sich in der geschlossenen Position befinden,
- zwei Schubstangen (19.1, 19.2) zum Verbinden der zweiten Schubstange (34.2) mit einer dritten Schubstange (34.3), welche mit der Betätigungsachse (6.3) des dritten Ventils (5.3) drehfest verbunden ist, zu einem Gelenkparallelogramm.

7. Anlage nach Anspruch 4, **dadurch gekennzeichnet, dass**:
- das Betätigungsteil (11) eine geschlossene erste Ausnehmung (12, 16) und, sich außen öffnend, eine zweite Ausnehmung (13, 17, 18) definiert,
- der Mechanismus zur Umwandlung der Bewegung des Teils umfasst:
- eine erste Rolle (9.1), die in der ersten Ausnehmung (12, 16) um eine Schwenkachse (20.2), welche an einem der Enden einer mit der Betätigungsachse (6.1) des ersten Ventils (5.1) drehfest verbundenen ersten Schubstange (8.1) gelegen ist, rollend angebracht ist,
- eine zweite Rolle (9.2), die in der zweiten Ausnehmung (13, 17, 18) um eine Schwenkachse (20.4), welche an einem der Enden einer mit der Betätigungsachse (6.2) des zweiten Ventils (5.2) drehfest verbundenen zweiten Schubstange (8.2) gelegen ist, rollend angebracht ist,
- zwei Schubstangen (19.1, 19.2) zum Verbinden der zweiten Schubstange (8.2) mit einer dritten Schubstange (8.3), welche mit der Betätigungsachse (6.3) des dritten Ventils (5.3) drehfest verbunden ist, zu einem Gelenkparallelogramm, wobei die erste, die zweite und die dritte Schubstange (8.1, 8.2, 8.3) parallel verlaufen und die gleiche Länge aufweisen, und
- einen ergänzenden Schwingarm (10), der mit dem einen seiner Enden an dem anderen Ende der ersten Schubstange (8.1) als dem mit der ersten Rolle (9.1) angelenkt ist und der an seinem anderen Ende eine Ausnehmung (21) zum lösbaren Anlenken des ergänzenden Schwingarms (10) an dem anderen Ende der zweiten Schubstange (8.2) als dem mit der zweiten Rolle (9.2) umfasst, wobei die Länge des ergänzenden Schwingarms (10), zwischen seinen Gelenkachsen gezählt, gleich dem Achsabstand der beiden Rollen (9.1, 9.2) ist.

8. Anlage nach Anspruch 6 oder 7, **dadurch gekennzeichnet, dass** die Laufrichtung der Rollen in den Ausnehmungen (12, 16) und (13, 17) oder (35, 37) und (36, 38) senkrecht zu der Bewegungsrichtung des Betätigungsteils (11 oder 42) verläuft.

9. Anlage nach einem der Ansprüche 6 bis 8, **gekennzeichnet durch** ein mechanisches Mittel, das die drei Ventile während des Transports in der geöffneten Position hält, wobei dieses Mittel insbesondere **dadurch** realisiert ist, dass das Betätigungsteil (11 oder 42) in jeder Ausnehmung einen Hohlraum (14, 15) oder (39, 40), der sich auf der von der entsprechenden Betätigungsachse (6.1 oder 6.2) abgewandten Seite erstreckt, definiert.

10. Anlage nach einem der Ansprüche 6 bis 9, **dadurch gekennzeichnet, dass** die erste und die zweite Schubstange (8.1, 8.2) gegenüber der Bewegungsachse des Betätigungsteils (11, 42) geneigt sind, wenn die Ventile geöffnet sind.

11. Anlage nach einem der Ansprüche 7 bis 10, **dadurch gekennzeichnet, dass**:
- ein Anschlag (23) an der ersten Schubstange (8.1) zwischen dem anderen Ende der ersten Schubstange (8.1) als dem, an dem die erste Rolle (9.1) angebracht ist, und der Stelle, an der die erste Schubstange (8.1) mit der Betätigungsachse (6.1) des ersten Ventils fest verbunden ist, befestigt ist, und
- eine Feder (22) den ergänzenden Schwingarm (10) an dem Anschlag (23) hält, wenn die Anschlussstücke voneinander getrennt sind.

12. Anlage nach Anspruch 3 oder aber nach Anspruch 3 und einem der Ansprüche 4 bis 10, **gekennzeichnet durch** ein mechanisches System zum Geschlossenhalten der drei Ventile, wenn die beiden Anschlussstücke getrennt sind.

13. Anlage nach Anspruch 12, **dadurch gekennzeichnet, dass** das mechanische System zum Geschlossenhalten der drei Ventile eine an einem Ende gegenüber der zweiten Schubstange (8.2) drehbar angeordnete Achse (24) umfasst, die an ihrem anderen Ende in der Nut einer Bohrung (25) drehbar um eine feste Achse (27) parallel zu den Achsen (6.2) und (20.4) gleitet und die derart angeordnet ist, dass die Achsen (6.2), (27) und (20.4) in dieser Reihenfolge nur einige Drehgrade vor der geschlossenen Position der Ventile fluchten, wobei eine Feder (26), die an der Achse (24) zwischen der Schulter der Achse (24) und der Bohrung (25) angeordnet ist, ermöglicht, die Abstandsschwankungen zwischen den Achsen (20.4) und (27) im Laufe der Drehung der zweiten Schubstange (8.2) aufzunehmen und die Abstützfunktion zu realisieren.

14. Anlage nach Anspruch 5, **dadurch gekennzeichnet, dass** die zweite Rolle (9.2) von der durch die Kontaktflächen (46, 48) gebildeten Ausnehmung dank einer zusätzlichen Bewegung des Betätigungsteils (44), die nicht auf die geschlossene Position der Ventile wirkt, dadurch freigegeben wird, dass die durch die Kontaktflächen (49, 51) und (50) gebildeten Ausnehmungen zu der Bewegungsachse des Betätigungsteils (44) parallel verlaufen.

## Claims

1. Installation for transferring fluid comprising a flexible cryogenic floating pipeline (3) which puts a navigation structure (1) in communication with another structure (2) and comprises a first end piece (4.1) from the side of the navigation structure and a second end piece (4.2) from the side of the other structure, at the end of the flexible cryogenic pipeline (3), a connector/disconnector (4) mounted on a substantially vertical section of the pipeline and having the first end piece (4.1) above the second end piece (4.2), a first valve (5.1) with a manoeuvring shaft (6.1) being mounted at the end of the first end piece (4.1) turned towards the second end piece (4.2) and a second valve (5.2) with a manoeuvring shaft (6.2) being mounted at the end of the second end piece (4.2) turned towards the first valve (5.1), **characterised in that** the valves are activated by single actuator which is common to both of them, and a mechanism is provided for transforming the displacement into the translation of the actuator (28, 29) into a joint pivoting of the manoeuvring shafts (6.1, 6.2) of the valves (5.1, 5.2), the transformation mechanism being composed of two parts, the first one joined to the first end piece (4.1), the second one to the second end piece (4.2), which are arranged in such a way as to connect with or disconnect from one another respectively when the connector/disconnector (4) is connected or disconnected.

2. Installation according to claim 1, **characterised in that** the first and the second parts of the transformation mechanism are only in contact at one or two points.

3. Installation according to claim 1 or 2, **characterised by** a third valve (5.3) activated by the common actuator and with a manoeuvring shaft (6.3) mounted at the other end of the second end piece (4.2) having its manoeuvring shaft (6.3) parallel to those of the other valves (5.1, 5.2).

4. Installation according to any one of claims 1 to 3, **characterised in that** a manoeuvring part (11, 42, 44) is provided, which is mounted on the first mobile end piece (4.1) only in translation, which is associated with the valves (5.1, 5.2, 5.3) and on which the actuator (28, 29) applies a displacement force.

5. Installation according to claim 4, **characterised in that**;
- the first connecting rod (43.1), joined in rotation of the manoeuvring shaft (6.1) of the first valve (5.1), defines a first recess (45, 47, 49, 51) and
- the second connecting rod (43.2), joined in rotation of the manoeuvring shaft (6.2) of the second valve (5.2), defines a second outlet recess (46, 48, 50, 52),
- the mechanism for transforming the displacement of the part (42) comprises:
- a first roller (9.1) mounted rolling in the first recess (45, 47, 49, 51) about a first pivot axis (20.11) located on the manoeuvring part (44),
- a second roller (9.2) mounted rolling in the second outlet recess (46, 48, 50, 52) about a second pivot axis (20.12) located on the manoeuvring part (44),
- the line segments between the manoeuvring shaft (6.1) and the first pivot axis (20.11), on the one hand, and the manoeuvring shaft (6.2) and the second pivot axis (20.12), on the other hand, are parallel, of the same length and preferably inclined in clockwise direction in relation to the axis of the pipeline (XX') when the two valves (5.1, 5.2) are in a closed position,
- two connecting rods (19.1, 19.2), in an articulated parallelogram, of the second connecting rod (43.2) to a third connecting rod (43.3) which is joined in rotation with the manoeuvring shaft (6.3) of the third valve (5.3).

6. Installation according to claim 4, **characterised in that** :
- the manoeuvring part (42) defines a first closed recess (35, 37) and, opening to the outside, a second recess (36, 38, 41),
- the mechanism for transforming the displacement of the part (42) comprises:
- a first roller (9.1) mounted rolling in the first recess (35, 37) around a pivot first axis (20.9) located at one of the ends of a first connecting rod (34.1) joined rotatably with the manoeuvring shaft (6.1) of the first valve (5.1),
- a second roller (9.2) mounted rolling in the second recess (36, 38, 41) about a second pivot axis (20.10) located at one of the ends of a second connecting rod (34.2) joined in rotation with the manoeuvring shaft (6.2) of the second valve (5.2),
- the straight segments between the manoeuvring shaft (6.1) and the first pivot axis (20.9), on the one hand, and the manoeuvring shaft (6.2) and the second pivot axis (20.10), on the other hand, are parallel, of the same length and inclined in clockwise direction in relation to the axis of the pipeline, when the two valves (5.1, 5.2) are in a closed position,
- two connecting rods (19.1, 19.2), in an articulated parallelogram, of the second connecting rod (34.2) to a third connecting rod (34.3) which is joined in rotation of the manoeuvring shaft (6.3) of the third valve (5.3).

7. Installation according to claim 4, **characterised in that**
- the manoeuvring part (11) defines a first closed recess (12, 16) and, opening to the outside, a second recess (13, 17, 18),
- the mechanism for transformation of the displacement of the part comprises:
- a first roller (9.1) mounted rolling in the first recess (12, 16) around a pivot axis (20.2) located at one of the ends of a first connecting rod (8.1) joined in rotation of the manoeuvring shaft (6.1) of the first valve (5.1),
- a second roller (9.2) mounted rolling in the second recess (13, 17, 18) around a pivot axis (20.4) located at one of the ends of a second connecting rod (8.2) joined in rotation of the manoeuvring shaft (6.2) of the second valve (5.2),
- two connecting rods (19.1, 19.2), in an articulated parallelogram, of the second connecting rod (8.2) to a third connecting rod (8.3), which is joined in rotation of the manoeuvring shaft (6.3) of the third valve (5.3), the first, second and third connecting rods (8.1, 8.2, 8.3) being in parallel and of the same length, and
- a complementary connecting rod (10), articulated at one of its ends to the end of the first connecting rod (8.1) different from the one with the first roller (9.1) and comprising at its other end a recess (21) of movable articulation of the connecting rod (10) complementary to the end of the second connecting rod (8.2) other than the one having the second roller (9.2), the length of the complementary connecting rod (10), between its articulation axes, being equal to the interaxial distance of the two rollers (9.1, 9.2).

8. Installation according to claim 6 or 7, **characterised in that** the rolling direction of the rollers in the recesses (12, 16) and (13, 17) or (35, 37) and (36, 38) is perpendicular to the direction of displacement of the manoeuvring part (11 or 42).

9. Installation according to any one of claims 6 to 8, **characterised by** a mechanical device which keeps the three valves in an open position during the transfer, said device being formed in particular by the fact that the manoeuvring part (11 or 42) defines in each recess a cavity (14, 15) or (39, 40) which extends from the side opposite the corresponding manoeuvring shaft (6.1 or 6.2).

10. Installation according to any one of claims 6 to 9, **characterised in that** the first and second connecting rods (8.1, 8.2) are inclined in relation to the displacement axis of the manoeuvring part (11, 42) when the valves are open.

11. Installation according to any one of claims 7 to 10, **characterised in that**:
- a stop (23) is fixed to the first connecting rod (8.1) between the end of the first connecting rod (8.1) other than the one where the first roller (9.1) is mounted and the point where the first connecting rod (8.1) is connected to the manoeuvring shaft (6.1) of the first valve and
- a spring (22) holds the complementary connecting rod (10) on the stop (23) when the end pieces are separated from one another.

12. Installation according to claim 3 and any one of claims 4 to 10, **characterised by** a mechanical system for keeping the three valves closed when the two end pieces are separated.

13. Installation according to claim 12, **characterised in that** the mechanical system for keeping the three valves closed comprises a shaft (24), positioned in pivot connection at one end in relation to the second connecting rod (8.2), which slides at its other end into the groove of a bore (25) pivoting around a fixed axis (27) parallel to the axes (6.2) and (20.4) and positioned in such a way that the axes (6.2) and (27) and (20.4) are aligned in this order only several degrees of rotation before the closed position of the valves, a spring (26) positioned on the shaft (24) between the shoulder of the shaft (24) and the bore (25), making it possible to accommodate variations in distance between the axes (20.4) and (27) during the rotation of the second connecting rod (8.2) and perform the function of a brace.

14. Installation according to claim 5, **characterised in that** the second roller (9.2) is released from the recess formed by the contact surfaces (46, 48) by way of an additional displacement of the manoeuvring part (44) not acting on the closed position of the valves by the fact that the recesses formed by the contact surfaces (49, 51) and (50) are parallel to the displacement axis of the manoeuvring part (44).
